(19) Europäisches Patentamt
European Patent Office
Office européen des brevets

(11) **EP 2 938 995 B1**

(12) **EUROPEAN PATENT SPECIFICATION**

(45) Date of publication and mention
of the grant of the patent:
**17.05.2017 Bulletin 2017/20**

(21) Application number: **13815496.8**

(22) Date of filing: **20.12.2013**

(51) Int Cl.:
*G01N 1/31* (2006.01)     *G01N 35/00* (2006.01)
*B01F 11/00* (2006.01)     *B01L 3/00* (2006.01)
*G01N 35/10* (2006.01)     *B01L 7/00* (2006.01)
*B01L 9/00* (2006.01)

(86) International application number:
**PCT/EP2013/077648**

(87) International publication number:
**WO 2014/102183 (03.07.2014 Gazette 2014/27)**

(54) **OPPOSABLES AND AUTOMATED SPECIMEN PROCESSING SYSTEMS WITH OPPOSABLES**

GEGENÜBERLIEGENDE ELEMENTE UND AUTOMATISIERTES
PROBENVERARBEITUNGSSYSTEM MIT GEGENÜBERLIEGENDEN ELEMENTEN

ÉLÉMENTS OPPOSABLES ET SYSTÈMES DE TRAITEMENT D'ÉCHANTILLON AUTOMATISÉS
AYANT DES ÉLÉMENTS OPPOSABLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2012   US 201261746078 P
26.12.2012   US 201261746085 P
26.12.2012   US 201261746087 P
26.12.2012   US 201261746089 P
26.12.2012   US 201261746091 P
14.03.2013   US 201313831255**

(43) Date of publication of application:
**04.11.2015 Bulletin 2015/45**

(73) Proprietor: **Ventana Medical Systems, Inc.
Tucson, Arizona 85755 (US)**

(72) Inventors:
• **OTTER, Michael**
**Tucson, Arizona 85737 (US)**
• **KRAM, Brian H.**
**Tucson, Arizona 85739 (US)**
• **JONES, Jessica**
**Oro Valley, Arizona 85737 (US)**
• **MARTIN, Carl**
**Oro Valley, AZ 85755 (US)**
• **MARSHALL, Kevin David**
**Tucson, AZ 85750 (US)**
• **TSE, Christine**
**San Diego, CA 92127 (US)**
• **HARRISON, Joshua David Kenneth**
**Tucson, AZ 85741 (US)**

(74) Representative: **Herzog, Fiesser & Partner
Patentanwälte PartG mbB
Dudenstrasse 46
68167 Mannheim (DE)**

(56) References cited:
**WO-A1-2011/060387     WO-A1-2011/139978
US-A1- 2006 019 302     US-A1- 2011 305 842
US-B1- 6 485 918**

EP 2 938 995 B1

Description

TECHNICAL FIELD

This disclosure relates to systems for treating specimens carried on microscope slide for analysis. In particular, the disclosure relates to microscope slide carrying specimen processing systems and methods of processing such specimens.

BACKGROUND

A wide variety of techniques have been developed to prepare and analyze biological specimens. Example techniques include microscopy, microarray analyses (e.g., protein and nucleic acid microarray analyses), and mass spectrometric methods. Specimens are prepared for analysis by applying one or more liquids to the specimens. If a specimen is treated with multiple liquids, both the application and the subsequent removal of each of the liquids can be important for producing samples suitable for analysis.

WO 2011/060387 A1 discloses a slide processing apparatus, comprising a slide placed on a slide holder platen comprising a heater and an opposable element held by an opposable actuator.

US 2006/019302 A1 presents a method and an apparatus of contacting a biological sample with a solution. Herein, the method comprises the steps of moving a curved surface wetted with the solution in proximity to the biological sample whereby the distance separating the wetted curved surface and the biological sample is sufficient to form a moving liquid meniscus layer between the two. The apparatus comprises a platform for supporting a microscope slide having a biological sample thereon; a translating cap having a curved lower surface positioned above the platform and being in proximity to a biological sample when in operation; means for moving the translating cap back and forth over the biological sample; and means for applying and removing liquid to and from the cap.

US 2011/305842 A1 describes a slide processing apparatus adapted to deliver a substance to a mounting surface of a slide carrying the specimen, wherein the substance is contacted with an opposable element held by an opposable holder device. The opposable element is pulled towards the slide by the substance which can spread along the mounting surface as the opposable element is flattened.

US 6,485,918 B1 discloses a method and an apparatus for incubating a liquid reagent with target spots on a microarray substrate. A deformable cover is placed over the surface of the microarray substrate having the target spots with the liquid reagent between the microarray substrate and the deformable cover, and a device is used to apply a force to the deformable cover. Herein, mixing of the liquid reagents is performed by changing the height of flexible spacers. As long as not pressed, the spacers exhibit the same height.

WO 2011/139978 A1 describes an automated staining apparatus comprising an opposable element and a mixing extension. The opposable element is moved over a slide to move a band of liquid using capillary action. Herein, the opposable element has a lowered portion in the middle such that the height of the capillary gap is smaller, thus promoting lateral mixing.

Microscope slides bearing biological specimens, e.g., tissue sections or cells, are often treated with one or more dyes or reagents to add color and contrast to otherwise transparent or invisible cells or cell components. Specimens can be prepared for analysis by manually applying dyes or other reagents to specimen-bearing slides. This labor-intensive process often results in inconsistent processing due to individual techniques among laboratory technicians.

"Dip and dunk" automated machines immerse specimens in liquids by a technique similar to manual immersing techniques. These automated machines can process specimens in batches by submerging racks carrying microscope slides in open baths. Unfortunately, carryover of liquids between containers leads to contamination and degradation of the processing liquids. Worse, cells sloughing of the specimen carrying slides can cause contamination of other slides in the liquid baths. These types of processes also utilize excessive volumes of liquids, resulting in relatively high processing costs when the reagents must be changed to reduce the possibility of specimen cross-contamination. Open containers are also prone to evaporative losses and reagent oxidative degradation that may significantly alter the concentration and effectiveness of the reagents, resulting in inconsistent processing.

It may be difficult to process samples without producing significant volumes of waste that may require special handling and disposal.

Immunohistochemical and in situ hybridization staining processes are often used to prepare tissue specimens. The rate of immunohistochemical and in situ hybridization staining of sectioned fixed tissue on a microscope slide is limited by the speed at which molecules (e.g., conjugating biomolecules) can diffuse into the fixed tissue from an aqueous solution placed in direct contact with the tissue section. Tissue is often "fixed" immediately after excision by placing it in a 10% solution of formaldehyde, which preserves the tissue from autocatalytic destruction by cross-linking much of the protein via methylene bridges. This cross-linked tissue may present many additional barriers to diffusion, including the lipid bilayer membranes that enclose individual cells and organelles. Conjugate biomolecules (antibody or DNA probe molecules) can be relatively large, ranging in size from a few kilodaltons to several hundred kilodaltons, which constrains them to diffuse slowly into solid tissue with typical times for sufficient diffusion being in the range of several minutes to a few hours. Typical incubation conditions are 30 minutes at 37 degrees centigrade. The stain rate is often driven by a concentration gradient so the stain rate can be increased by increasing the concentration of the conjugate in the reagent to compensate for slow diffusion. Unfortunately, conjugates are often very expensive, so increasing their concentration is wasteful and often not economically viable. Additionally, the excessive amount of conjugate that is driven into the tissue, when high concentrations are used, is entrapped in the tissue, is difficult to rinse out, and causes high levels of non-specific background staining. In order to reduce the noise due to non-specific background staining and increase the signal of specific staining, low concentrations of conjugate with long incubation times are often used to allow the conjugate to bind only to the specific sites. Histology staining instruments often use relatively large volumes of reagent (100 μL) in a puddle of typically 300 μL of buffer. Some conventional instruments mix the reagent by alternating tangential air jets onto an overlaying oil layer that rotates and counter-rotates when contacted by the alternating air jets, thereby imparting motion into the underlying aqueous puddle. This mixing is slow and not particularly vigorous, and it can create significant evaporation losses, especially at the elevated temperatures that are often necessary. Large volumes of rinse liquid are used to physically displace the large puddles of reagents, which are covered with oil. This rinsing procedure produces large volumes of waste liquid, which may be hazardous waste.

## OVERVIEW OF TECHNOLOGY

At least some embodiments of the technology are directed to biological specimen processing systems capable of processing specimens carried on slides. The specimen processing systems can sequentially deliver slides and opposing surfaces (opposables) to specimen processing stations. The specimen processing stations can use opposables to manipulate and direct a series of liquids to the specimens. The liquids can be manipulated over or across the slide surfaces in conjunction with capillary action while the specimen processing stations control the movement of the opposables and the processing temperatures for histology staining, immunohistochemical staining, in situ hybridization staining, or other specimen processing protocols. In some embodiments, the opposables are surfaces or opposable elements capable of manipulating one or more substances on a slide. Manipulating a substance in the form of a fluid can include spreading the fluid, displacing a thin film of fluid, or otherwise altering a bolus of fluid, a band of fluid, or a thin film. As used herein, the term "fluid" is identical with the term "liquid".

At least some embodiments of the technology are directed to a system that contacts a biological specimen with a liquid by moving an opposable in contact with the liquid. A distance separating a non-planar (e.g., curved), wetted surface of the opposable and a slide carrying the specimen is sufficient to form a liquid meniscus layer between the wetted surface and the slide. The meniscus layer contacts at least a portion of the biological specimen and is moved across the slide using capillary and other manipulative action.

The meniscus layer, in some embodiments, can be a relatively thin fluid film, a band of fluid, or the like. The opposable is movable to different positions relative to the slide and can accommodate different volumes of liquid forming the meniscus layer. The capillary action can include, without limitation, movement of the meniscus layer due to the phenomenon of the liquid spontaneously creeping through the gap between the curved, wetted opposable surface and the slide due to adhesive forces, cohesive forces, and/or surface tension. The opposable can manipulate (e.g., agitate, displace, etc.) the liquid to process the specimen using relatively small volumes of a liquid to help manage waste and provide consistent processing. Evaporative losses, if any, can be managed to maintain a desired volume of liquid, reagent concentration, or the like. Relatively low volumes of liquids can be used to process the specimens for a reduced liquid waste.

## BRIEF DESCRIPTION OF THE DRAWINGS

The following description and examples illustrate some arrangements which are not part of the claimed invention. The same reference numerals refer to like parts or acts throughout the various views, unless otherwise specified.

Figure 1 is a side view of an opposable actuator holding an opposable.

Figure 2 is an isometric view of a specimen processing station ready to process a specimen on a slide.

Figure 3A is a front, top, left side isometric view of a slide holder platen holding a slide.

Figure 3B is a front, top, left side isometric view of the slide holder platen of Figure 3A ready to hold a slide.

Figure 4 is a front, bottom, left side isometric view of the slide holder platen of Figure 3A.

Figure 5 is a bottom view of the slide holder platen of Figure 3A.

Figure 6A is a cross-sectional isometric view of the slide holder platen taken along a line 6A-6A of Figure 5.

Figure 6B is a cross-sectional view of the slide holder platen taken along a line 6B-6B of Figure 5.

Figure 7 is a top plan view of a specimen processing station holding a specimen-bearing slide.

Figure 8 is a cross-sectional view of a portion of the specimen processing station taken along a line 8-8 of Figure 7.

Figure 9 is a cross-sectional view of a portion of the specimen processing station taken along a line 9-9 of Figure 7.

Figure 10 is a cross-sectional view of a slide holder platen taken along a line 10-10 of Figure 7.

Figure 10A is a plot of location along a contact surface of a slide support versus thermal energy conducted to a slide.

Figure 10B is a plot of location along the contact surface of the slide support versus temperature of the contact surface.

Figure 10C is a plot of location along an upper surface of a slide versus temperature of the upper surface of the slide.

Figure 11 is a top plan view of heating zones produced on a slide support surface of the support element.

Figure 12 is a flow chart illustrating a method for heating a slide.

Figure 13 illustrates a slide holder platen and a dispenser assembly.

Figure 14 is a plot of equilibrium volume of a liquid on a slide versus total evaporation rate of the liquid.

Figure 15 is a plot of time versus liquid coverage.

Figures 16A and 16B are side and top views of a narrowed band of liquid at an end of a gap between an opposable and a slide.

Figures 17A and 17B are side and top views of the spread band of liquid.

Figures 18A and 18B are side and top views of the band of liquid contacting a biological specimen.

Figures 19A and 19B are side and top views of the band of liquid between the opposable and a region of the slide adjacent to a label.

Figures 20A and 20B are side and top views of the narrowed band of liquid at an end of a gap adjacent to a label of the slide.

Figure 21 is an isometric view of an opposable.

Figure 22 is a top plan view of the opposable of Figure 21.

Figure 23 is a side elevational view of the opposable of Figure 21.

Figure 24 is a detailed view of a portion of the opposable of Figure 23.

Figure 25 is a plan view of a specimen-bearing slide illustrating an example of stain non-uniformity.

Figure 26 is a plan view of a specimen-bearing slide illustrating another example of stain non-uniformity.

Figure 27 is a plot of average real-time reactant concentration on the x-axis versus reaction rate on the y-axis for one example of a specimen-processing reaction during a processing period.

Figure 28 is an isometric view of an opposable in accordance with an embodiment of the disclosed technology.

Figure 29 is a top plan view of the opposable of Figure 28.

Figure 30 is a side elevational view of the opposable of Figure 28.

Figure 31 is a detailed view of a portion of the opposable of Figure 30.

Figure 32 is a plan view of a slide suitable for use with the opposable of Figure 28.

Figure 33 is a partially schematic side elevational view of a specimen-processing assembly including the opposable of Figure 28 and loaded with the slide of Figure 32 in accordance with an embodiment of the disclosed technology.

Figure 34A is a side elevational view of the opposable of Figure 28 and the slide of

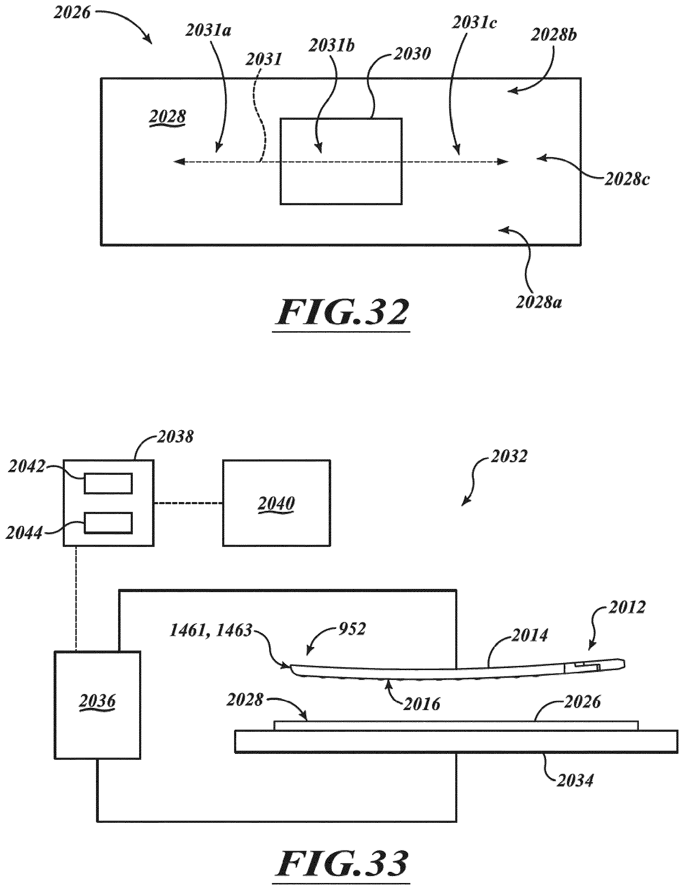

Figure 32 in a first end state.

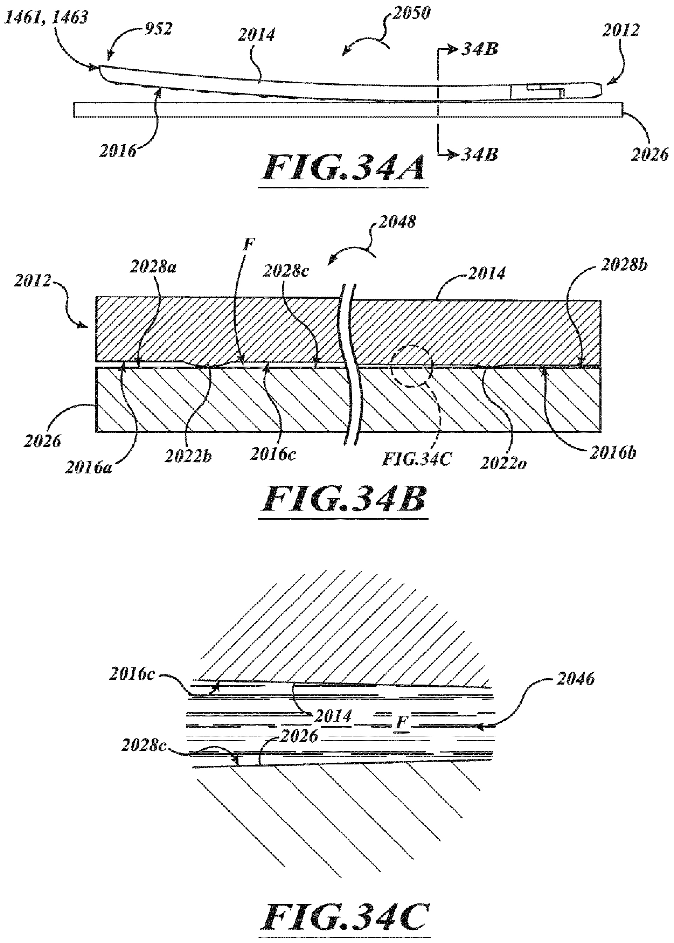

Figure 34B is a cross-sectional view taken along line 34B-34B in Figure 34A.

Figure 34C is an enlarged view of a fluid-carrying gap of Figure 34B with exaggerated slope.

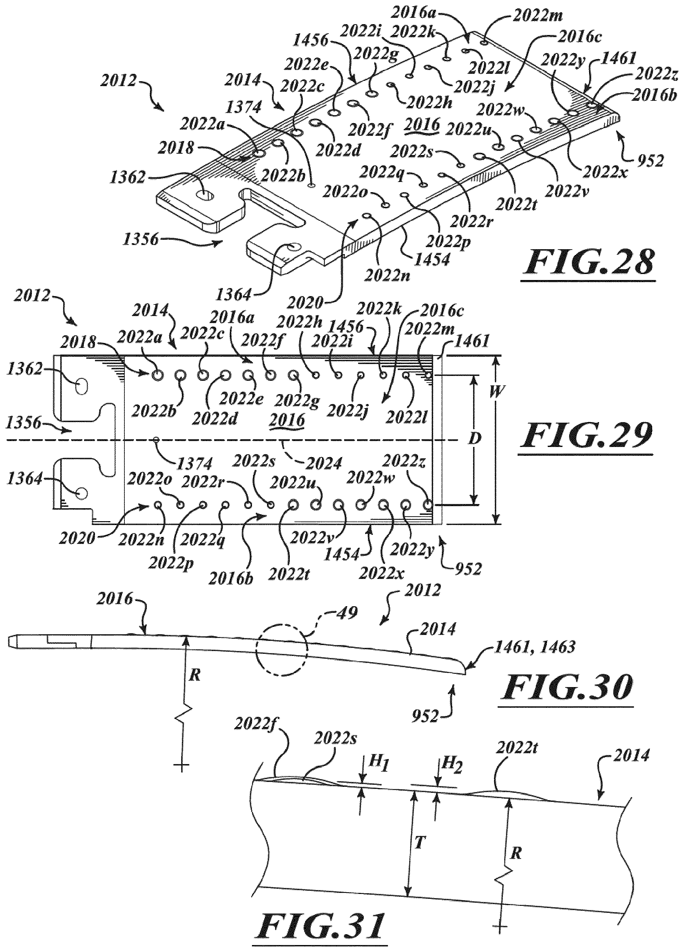

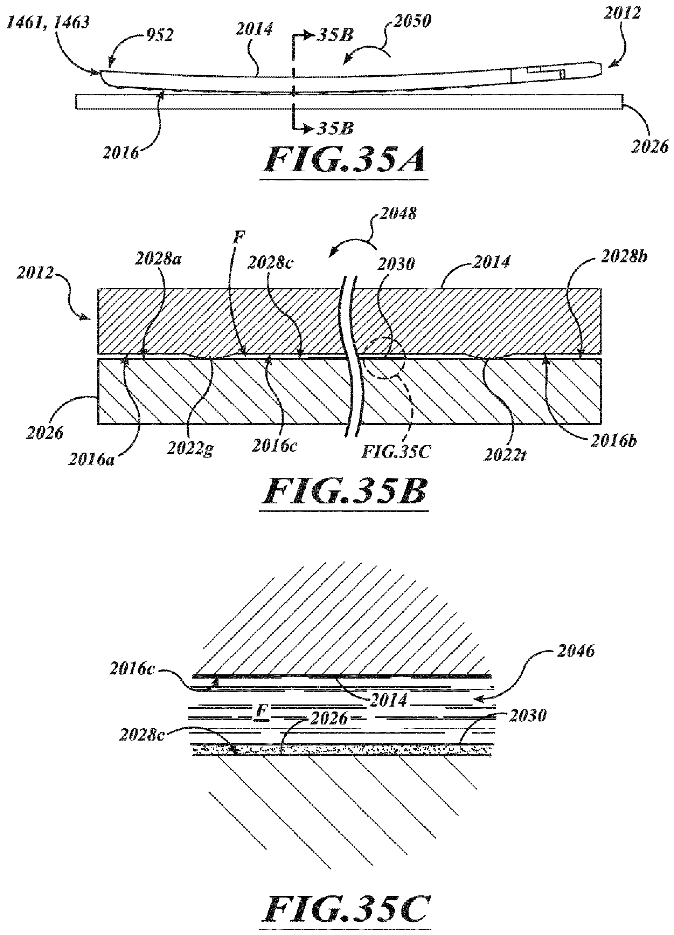

Figure 35A is a side elevational view of the opposable of Figure 28 and the slide of

Figure 32 in an intermediate state.

Figure 35B is a cross-sectional view taken along line 35B-35B in Figure 35A.

Figure 35C is an enlarged view of a fluid-carrying gap of Figure 35B.

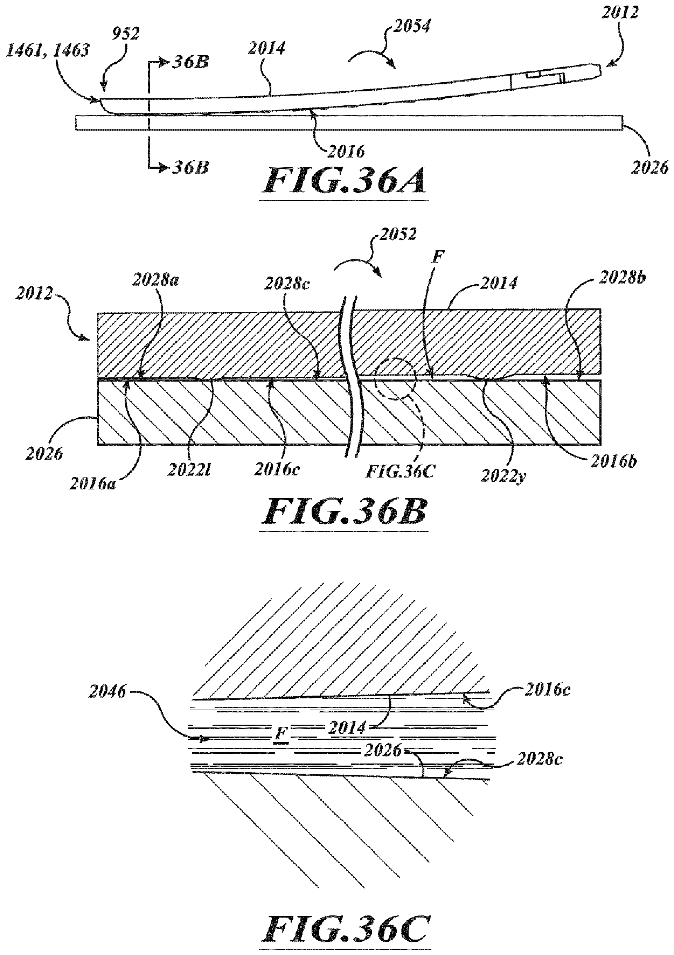

Figure 36A is a side elevational view of the opposable of Figure 28 and the slide of

Figure 32 in a second end state.

Figure 36B is a cross-sectional view taken along line 36B-36B in Figure 36A.

Figure 36C is an enlarged view of a fluid-carrying gap of Figure 36B with exaggerated slope.

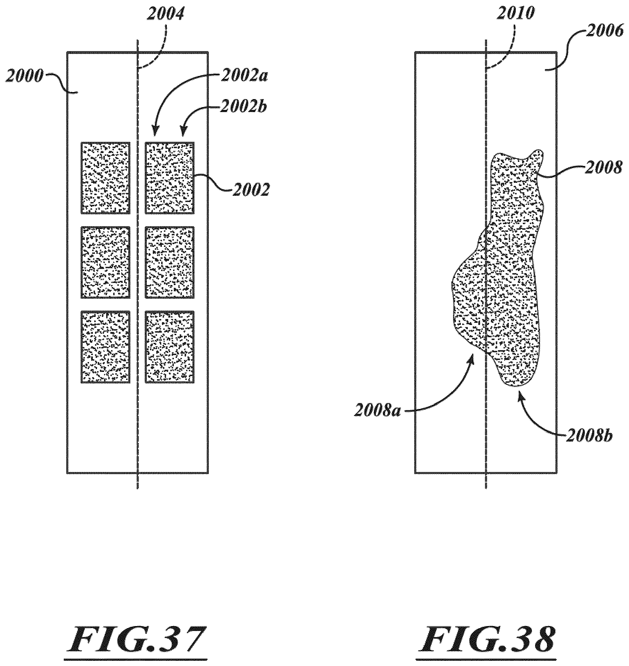

Figure 37 is a plan view of a specimen-bearing slide illustrating an example of relatively uniform staining.

Figure 38 is a plan view of a specimen-bearing slide illustrating another example of relatively uniform staining.

## DETAILED DESCRIPTION OF TECHNOLOGY

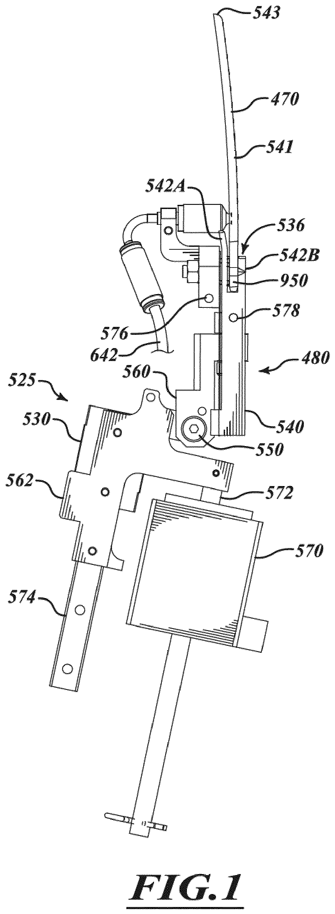

Figure 1 shows an opposable actuator 525 that includes an opposable receiver 480 and a drive mechanism 530. The opposable receiver 480 holds an opoposable 470 that can be used to manipulate and direct a series of liquids to a specimen. The opposable receiver 480 can include a clamp 536 and a main body 540. The clamp 536 includes a pair of jaws 542A, 542B that cooperate to hold a mounting end 950 of the opposable 470. The opposable 470 includes a main body 541 extending to a captivating end 543. The main body 541 is pivotally coupled to the drive mechanism 530 by a pivot 550. The drive mechanism 530 can include a linkage assembly 560 and a linear actuator assembly 562. The linkage assembly 560 includes the pivot 550, which allows rotation about one or more axes of rotation (e.g., two axes of rotation) and can include one or more roller ball bearings, pivots, hinges, or other features that provide desired motion. The linear actuator assembly 562 can include an energizable drive device 570 (e.g., a stepper motor, a drive motor, a solenoid, etc.), a moveable element 572 (e.g., a lead screw, a drive rod, etc.), and a rail assembly 574 (e.g., a carriage/rail assembly, a caged ball bearing linear rail assembly, etc.).

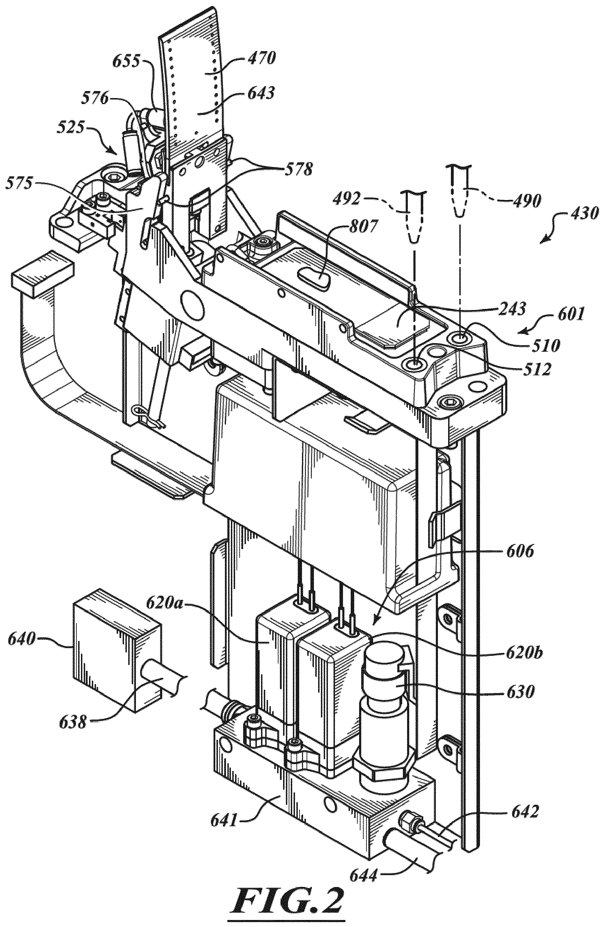

The opposable receiver 480 can be actuated by the linear actuator assembly 562 via the linkage assembly 560. The linear actuator assembly 562 can retract, and stationary cam(s) (e.g., cam 575 of Figure 2) can engage, pins 576, 578 and drive the opposable receiver 480 to an open configuration. As illustrated in Figure 1, the opposable receiver 480 in the open configuration can loosely hold the opposable 470. The opposable receiver 480 can be moved to a closed configuration by one or more biasing members (e.g., springs, pneumatic actuators, etc.). As the linear actuator assembly 562 extends, the pins 576, 578 can move upwardly and towards one another such that the biasing members close the opposable receiver 480.

The opposable actuator 525 can also include, without limitation, one or more sensors to detect the presence of the opposable 470, the position of the opposable 470, one or more characteristics of a processing liquid covered by the opposable 470, or the like. The sensors can include, without limitation, contact sensors, electromechanical sensors, optical sensors, or chemical sensors that can be coupled to or incorporated into the opposable receiver 480 or other suitable component. The number, positions, and configurations of the sensors can be selected to achieve the desired monitoring functionality.

Figure 2 is an isometric view of a wetting module 430 holding a slide 243. The wetting module 430 includes the opposable actuator 525, a slide holder platen 601, and a manifold assembly 606. The opposable actuator 525 in a rolling state of operation can be extended or retracted to roll the opposable 470 back and forth along the slide 243. The motion of the rotary joints of the linkage assembly 560 (Figure 1), gravity, and/or liquid capillary forces can help maintain the desired motion of the opposable 470. The opposable actuator 525 can continuously or periodically roll (e.g., longitudinally roll, laterally roll, or both) the opposable 470 to agitate the volume of liquid, move (e.g., translate, spread, narrow, etc.) a band of liquid (e.g., a meniscus layer of liquid), control evaporation (e.g., to moderate evaporation), and/or otherwise manage the processing liquid.

The manifold assembly 606 includes a pair of sensors 620a, 620b (collectively "620") and a one or more valves 630. The sensors 620 can detect the pressures of working fluids and can send one or more signals indicative of detected pressures. A fluid line 638 can fluidically couple a pressurisation source 640 to a manifold 641. Fluid lines 642, 644 fluidically couple the manifold 641 to a liquid removal device 655 and the slide holder platen 601. The liquid removal device 655 can remove liquid between the opposable 470 and the slide 243 via a waste port 643. The line 644 can be used to draw a vacuum to hold the slide 243 on the slide holder platen 601.

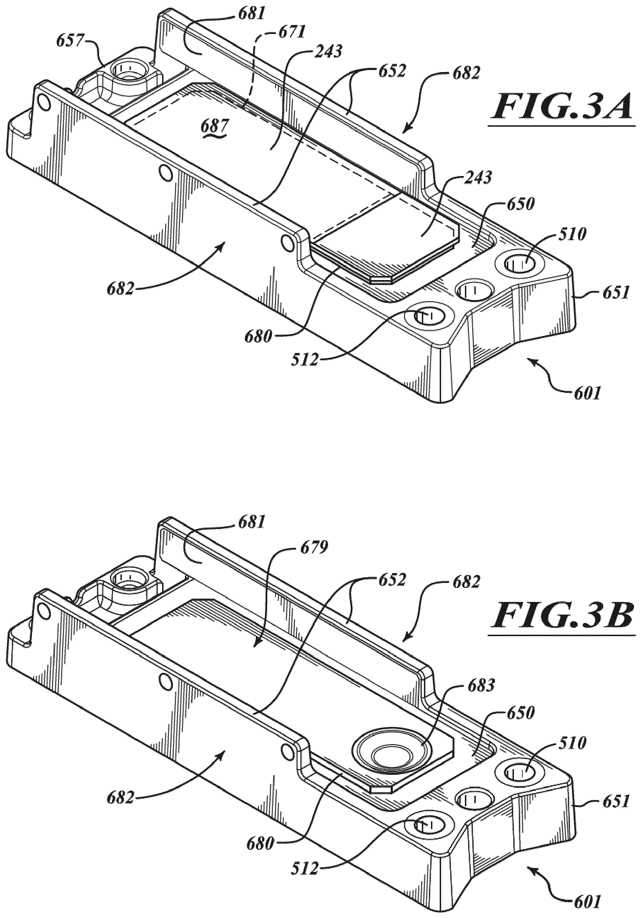

Figures 3A and 3B are isometric views of the slide holder platen 601. The slide holder platen 601 of Figure 3A supports the slide 243. The slide holder platen 601 of Figure 3B is empty. The slide holder platen 601 can include a support element 650 and a mounting base 651. The support element 650 includes a raised slide receiving region 680 having a contact or contact surface 679 (Figure 3B). A port 683 (Figure 3B) is positioned to draw a vacuum to hold the slide 243 against the contact surface 679. The port 683 can be a suction cup or other feature configured to facilitate drawing a strong vacuum between the slide 243 against the contact surface 679.

The support element 650 includes inner walls 681 positioned in outer walls 652 of the mounting base 651. The inner and outer walls 681, 652 form heatable sidewalls 682. The sidewalls 682 can be positioned on both sides of the contact surface 679 and can output heat energy to the surrounding air to control the temperature of the slide 243, processing fluid, and/or specimen(s). The sidewalls 682 can also be positioned to laterally surround the entire slide 243. The mounting base 651 can be made of an insulating material (e.g., plastic, rubber, polymers, or the like) that can insulate the support element 650 from other components. The mounting base 651 can be made of a material with a thermal conductivity that is substantially less than the thermal conductivity of the material of the support element 650. The mounting base 651 can surround and protect the support element 650 and includes a coupling region 657 to which the opposable actuator 525 can be coupled.

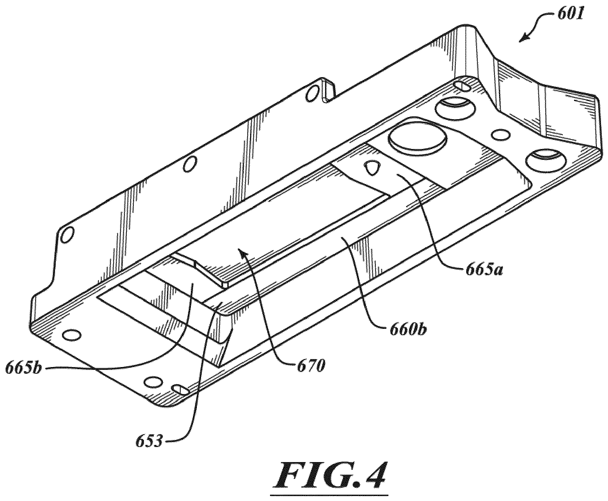

The support element 650 can be an uncoated element comprising one or more low heat transfer material(s) with a low thermal conductivity. Low heat transfer materials can include, without limitation, steel, stainless steel, or other materials with a thermal conductivity in a range of about 10 W/(m*K) at 25°C to about 25 W/(m*K) at 25°C. The low heat transfer material can comprise stainless steel with a thermal conductivity of 16 W/(m*K) at 25°C. The support element 650 can comprise mostly stainless steel by weight. At least most of the material of the support element 650 directly between a heating element 653 (Figure 4) and the slide 243 can comprise stainless steel by weight. The stainless steel support element 650 can be corrosion-resistant to the liquids used to process the specimens to provide a relatively long working life. The support element 650 can comprises antimon (k =18.5 W/(m*K) at 25°C) or chrome nickel steel (e.g., 18% Cr and 8% Ni by weight and with a thermal conductivity of about 16.3 W/(m*K) at 25°C). The support element 650 can comprise lead with a thermal conductivity of about 35 W/(m*K) at 25°C) or other metal with a similar thermal conductivity. The support element 650 can be made of a material with thermal conductivity less than copper or brass. The mounting base 651 can be made of an insulating material with a thermal conductivity that is less than the thermal conductivity of the support element 650. As such, the mounting base 651 can thermally insulate the support element 650.

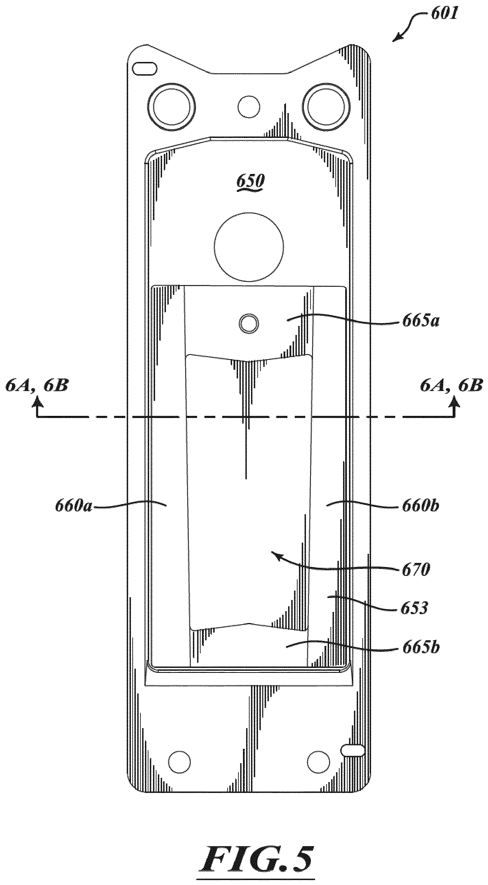

Figure 4 is a front, bottom, left side view of the slide holder platen 601. Figure 5 is a bottom view of the slide holder platen 601. The slide holder platen 601 can include the heating element 653, which can convert electrical energy to thermal energy and can include, without limitation, one or more traces, leads, resistive elements (e.g., active elements that produce thermal energy), fuses, or the like. The heating element 653 can be a resistive heater. Other types of heaters can also be used, if needed or desired. The heating element 653 can output thermal energy to the support element 650 to achieve a desired heat transfer pattern. Heat can be transferred non-uniformly to the slide 243 via the support element 650 to compensate for evaporative heat losses. Non-uniform heat transfer along the contact surface 679 may produce a non-uniform temperature profile along the contact surface 679. A generally uniform temperature profile can be produced across a processing zone 671 (Figure 3A) of slide 243. The processing zone 671 can be a staining region, a mounting region, or area of an upper or specimen-bearing surface 687 (Figure 3A) of the slide 243 suitable for carrying one or more specimen(s).

The heating element 653 of Figure 5 can include two elongate slide heating portions 660a, 660b (collectively 660) and two end heating portions 665a, 665b (collectively "665"). The elongate portions 660 deliver thermal energy to the longitudinally extending edge portions of the slide 243. The end heating portions 665 deliver thermal energy to the ends of the processing zone 671. The elongate portions 660 and the end heating portions 665 can be coupled together to form a multi-piece heating element 653. The elongate portions 660 and the end heating portions 665 can be made of materials with the same conductivity or different thermal conductivities. Each portion 660, 665 can be independently operated to output different amounts of thermal energy. The heating element 653 can have a one-piece construction with a uniform thickness or a variable thickness. The one-piece heating element 653 can be made of one material.

The elongate portions 660 and end heating portions 665 together define a convection cooling feature in the form of a pocket 670. The pocket 670 can help isolate heat in the support element 650 to help keep thermal energy at the location it is applied and can also help reduce or limit the thermal mass of the slide holder platen 601. The pocket 670 can be an opening with a substantially rectangular shape, as shown in Figure 5. However, the pocket 670 can have other shapes based on the desired heat distribution along the contact surface 679 of the support element 650.

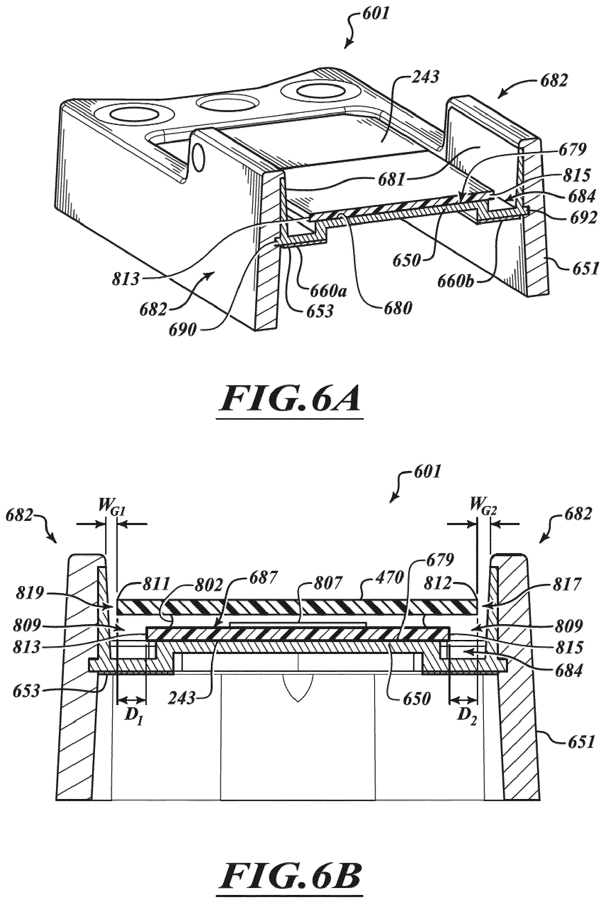

Figure 6A is a cross-sectional isometric view of the slide holder platen 601. The support element 650 includes the receiving region 680, sidewalls 682, and a channel 684. The receiving region 680 keeps the slide 243 spaced apart from fluids that can collect in the channel 684 during operation. The channel 684 can collect liquid that falls from edges 813, 815 of the slide 243. The slide 243 can extend outwardly from the receiving region 680 a sufficient distance (e.g., 0.5mm, 0.75mm, 1mm, 2mm, 4mm, or 6mm) to prevent liquid from wicking between the slide 243 and the contact surface 679.

The slide holder platen 601 can be made in a multi-step manufacturing process. The support element 650 can be formed by a machining process, stamping process, or the like. The support element 650 can be over-molded to form the mounting base 651, which can be made of an insulating material molded using an injection molding process, compressing molding processes, or other suitable manufacturing processes. Exemplary non-limiting insulating materials include, without limitation, plastics, polymers, ceramics, or the like. The support element 650 and mounting base 651 can remain securely coupled together to inhibit or prevent liquids from traveling between the support element 650 and mounting base 651. For example, the interface between the supporting element 650 and the mounting base 651 can form a fluid-tight seal with or without utilizing any sealants. However, sealants, adhesives, and/or fasteners can be used to securely couple the support element 650 to the mounting base 651. The illustrated support element 650 includes locking features 690, 692 to help minimize, limit, or substantially prevent movement of the support element 650 relative to the mounting base 651.

Figure 6B is a cross-sectional view of the slide holder platen 601. The opposable 470 engages a liquid 802 which engages a specimen 807. The sidewalls 682 can extend vertically above the slide 243. The distance that the sidewalls 682 extend vertically past the slide 243 can be selected to manage (e.g., limit, minimize, substantially prevent, etc.) air currents that can cause heat losses via convection (e.g., convection via the surrounding air), evaporation, or the like. For example, the slide holder platen 601 and opposable 470 can moderate evaporation by keeping the evaporation rate of the liquid 802 at or below about 7 microliters per minute, 5 microliters per minute, 3 microliters per minute or other maximum evaporation rates. The slide holder platen 601 and opposable 470 can keep the evaporation rate of the liquid 802 within a range of about 7 microliters per minute to about 1 microliters per minute. Such arrangements can moderate evaporative losses. The sidewalls 682 and the opposable 470 can also cooperate to help thermally isolate the fluid 802 from the surrounding environment.

A side portion 811 of the opposable 470 extends outwardly past the edge 813 of the slide 243 such that the side portion 811 is closer to the sidewall 682 than the edge 813 of the slide 243. A width $W_{G1}$ of a gap 819 can be smaller than a distance $D_1$ from the side portion 811 to the slide edge 813. A side portion 812 of the opposable 470 extends outwardly past the edge 815. A width $W_{G2}$ of a gap 817 can be smaller than a distance $D_2$ from the side portion 812 to the slide edge 815. The width $W_{G1}$ can be equal to or less than about 10%, 25%, or 50% of a distance between the left sidewall 682 and the edge 813. Similarly, width $W_{G2}$ can be equal to or less than about 10%, 25%, or 50% of a distance between the right sidewall 682 and the slide edge 815. The widths $W_{G1}$, $W_{G2}$ can be sufficiently small to inhibit or limit evaporative losses while allowing slight side-to-side movement of the opposable 470 to facilitate convenient handling. The widths $W_{G1}$, $W_{G2}$ can be equal to or less than about 1mm, 2mm, 4mm, or other suitable widths.

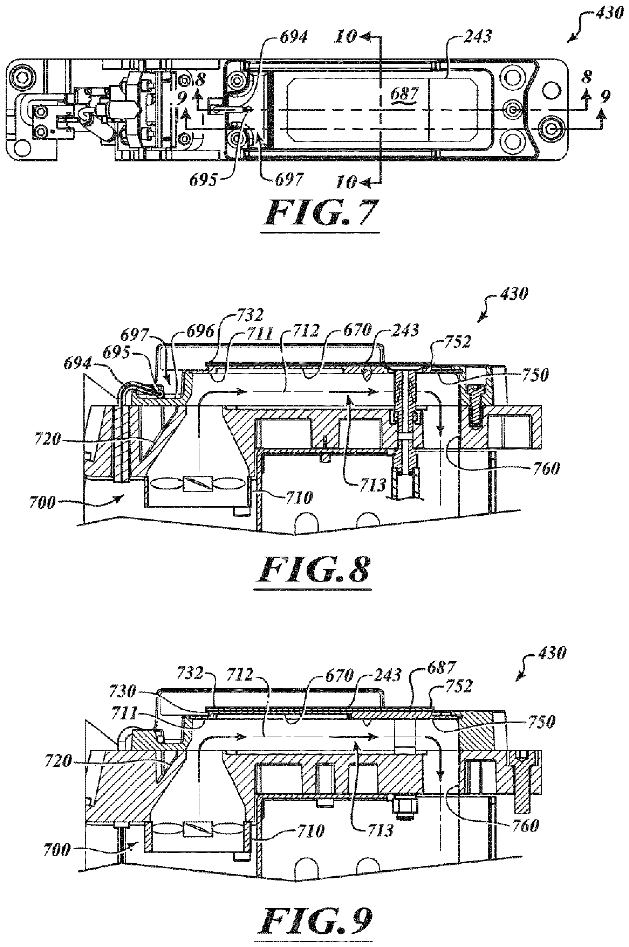

Figure 7 is a top plan view of the wetting module 430. Figure 8 is a cross-sectional view of a portion of the wetting module 430 taken along a line 8-8 of Figure 7. Figure 9 is a cross-sectional view of a portion of the wetting module 430 taken along a line 9-9 of Figure 7. Referring to Figures 7 and 8, a sensor 694 is positioned to detect liquid in a reservoir 697. The sensor 694 can include a thermistor element 695 positioned near a bottom 696 of the reservoir 697. When a sufficient volume of liquid is collected to contact the thermistor element 695, the sensor 694 sends a signal to another component, such as a controller. The detection of a threshold volume of liquid in the reservoir 697 can indicate a failure in the wetting module 430. Upon detection of a failure, the wetting module 430 can be disabled until the wetting module 430 can be, for example, inspected, cleaned, or otherwise maintained.

Referring to Figures 8 and 9, the wetting module 430 includes a convection system 700 that includes a flow generator 710, a duct 711, and a flow path 712 (illustrated in phantom line) defined by a passageway 713 of the duct 711. The flow generator 710 can include, without limitation, one or more fans, blowers, or other suitable components capable of generating a sufficient flow of a convection fluid (e.g., air, a refrigerant, etc.) along the flow path 712 to cool the back side of the support element 650, the slide 243, and/or items (e.g., specimens, reagents, or the like) carried on the slide 243.

The flow generator 710 can deliver the convection fluid towards an end 730 of the support element 650 located under a first end 732 of the slide 243. The convection fluid can travel vertically through a tapered section 720 that can accelerate the flow of convection fluid. The accelerated flow is directed horizontally and flows under the slide platen 601. The convection fluid can directly contact the support element 650 to facilitate and expedite cooling of the slide 243. For example, the convection fluid can flow into and along the pocket 670 to absorb thermal energy from the support element 650. The support element 650 absorbs thermal energy from the slide 243 to cool the upper surface 687 and to ultimately cool a liquid, specimen(s), or any other items or substances on the upper surface 687. The warmed fluid flows past the pocket 670 and proceeds under an end 750 of the support element 650 positioned underneath a label end 752 of the slide 243. The air flows downwardly through an outlet 760 to the surrounding environment.

The convection system 700 can be used to rapidly cool the slide 243. For example, the convection system 700 can help cool the liquid and/or specimen at a rate equal to or greater than about 2.5°C/sec. The temperature of a specimen can be at about 95°C and can be cooled to a temperature equal to or less than about 30°C in about four minutes or less. Other cooling rates can be achieved by increasing or decreasing the flow rate of the convection fluid, temperature of the convection fluid, or the like. During a heating cycle, the convention system 700 can be OFF, if desired.

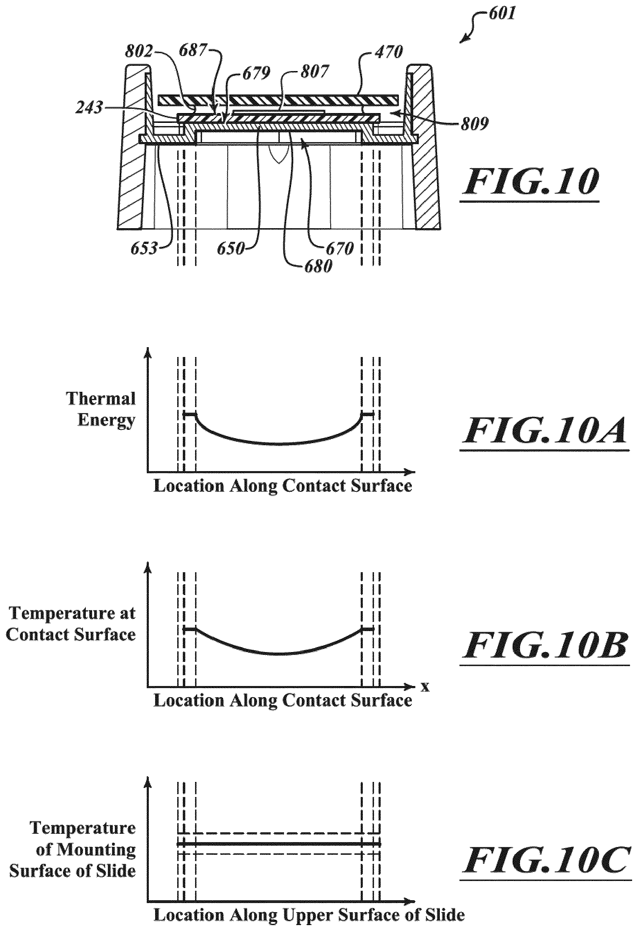

Figure 10 is a cross-sectional view of a portion of the slide holder platen 601 taken along a line 10-10 of Figure 7. The temperature of the liquid 802 can be maintained within a target temperature range selected based on the characteristics of the liquid 802, characteristics of a specimen (e.g., a thickness of the specimen, composition of the specimen, etc.), and the process to be performed. Because the regions of the liquid 802 nearest the edges of the slide 243 evaporate more than the central region of the liquid 802, the periphery of the slide 243 and the periphery of the liquid 802 tend to be at a lower temperature without compensation. The evaporative heat losses for high temperature processes (e.g., antigen retrieval) may be greater than the evaporative losses for low temperature processes (e.g., rinsing). Because significant temperature variations along the specimen 807 and/or the liquid 802 can lead to variations in processing, the wetting module 430 can maintain a desired temperature profile of the slide 243 by compensating for evaporative heat losses, including evaporative heat losses in high temperature and low temperature processes. The wetting module 430 can produce a substantially uniform temperature profile along the surface 687 to substantially uniformly heat the band of liquid 802 and/or the specimen 807. The uniform temperature profile can be maintained independently of changes in the surrounding environment to consistently process the entire specimen 807.

Figure 10A is a plot of the location along the width of the receiving region 680 versus thermal energy conducted to the slide 243. Figure 10B is a plot of the location along the width of the receiving region 680 versus a temperature of the contact surface 679 of the support element 650. Figure 10C is a plot of a location along the upper surface 687 of the slide 243. A comparison of Figures 10B and 10C shows that the temperature profile along the contact surface 679 of the support element 650 is different from the temperature profile along the upper surface 687 of the slide 243.

Referring to Figure 10A, the heating element 653 can non-uniformly transfer heat energy via conduction to the slide 243. The heat remains concentrated at the perimeter of the staining region where evaporative heat losses are relatively high. Because no heat energy is directly transferred via conduction to the portion of the support element 650 above the pocket 670, a non-uniform temperature profile is produced along the contact surface 679 of the support element 650 and can compensate for non-uniform heat losses associated with evaporation of the liquid 802. The compensation can produce a substantially uniform temperature profile along the upper slide surface 687. As shown in Figure 10C, a temperature along the upper slide surface 687 can be kept within a target temperature range (represented by two horizontal dashed lines). For antigen retrieval, the substantially uniform temperature profile can have a temperature variation that is equal to or less than 5% of the desired temperature and can be across most of the upper slide surface 687. The upper slide surface 687 can be kept at, for example, an average temperature or target temperature of about 95°C and within a range of about 90.25°C and about 99.75°C. The heater element 653 can produce less than about a 4% temperature variation across most of the upper slide surface 687. There can be less than 5% temperature variation across most of the upper slide surface 687. The upper slide surface 687 can be kept at, for example, an average temperature of about 95°C and within a range of about 92.63°C and about 97.38°C. An allowable temperature variation can be inputted by a user.

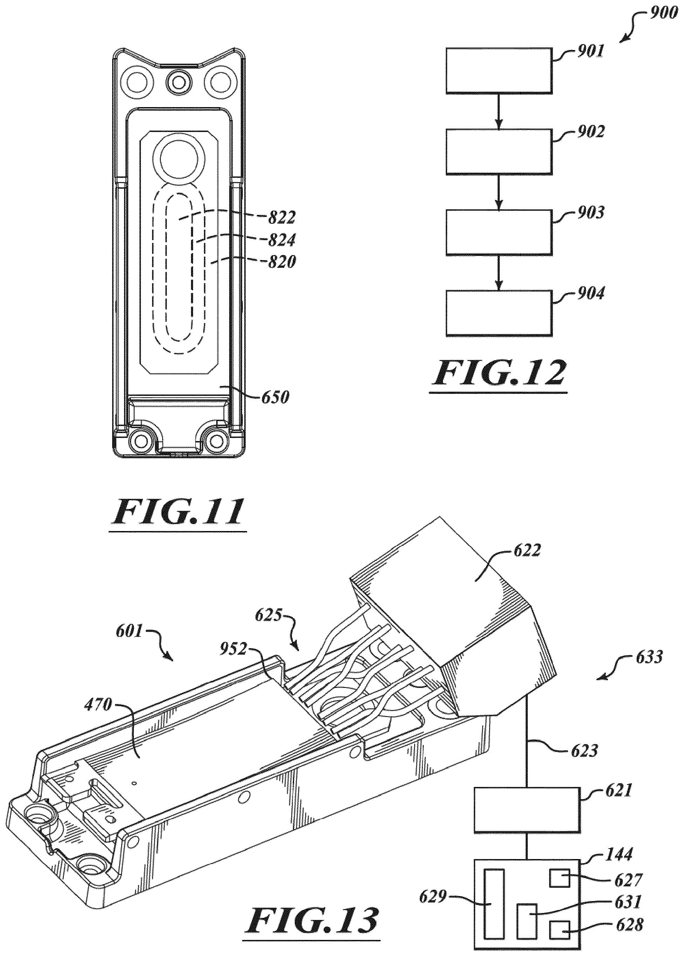

Figure 11 is a top view of heating zones. A high heating zone 820 surrounds an intermediate heating zone 824. The intermediate heating zone 824 surrounds a low heating zone 822. Heat from the heating element 653 primarily travels upwardly to define the high heating zone 820. The high heating zone 820 can be located underneath a perimeter of a staining area of the slide 243. The low heating zone 822 can generally correspond to the pocket 670 and the central processing area (e.g., a staining area) where one or more specimens are typically positioned. The temperature of the heating zones 820, 822, 824 can be generally inversely proportional to the rates of evaporation along the slide directly above that heating zone. For example, the low heating zone 822 can be positioned generally below the middle of the band of liquid 802 in which there is substantially no evaporative losses. The high heating zone 820 is positioned generally below the periphery of the band of liquid 802 that experiences relatively high evaporative losses.

Figure 12 is a flow chart illustrating a method 900 for heating the slide. At 901, the specimen-bearing slide 243 (Figure 3A) can be positioned on the contact surface 679 of the support element 650 (Figure 3B). The slide 243 can be preheated by the slide holder platen 601. A liquid can be delivered onto the heated slide 243. Alternatively, the slide holder platen 601 can heat the slide 243 after delivering the liquid.

At 902, the opposable 470 is used to manipulate the liquid and can mitigate and control evaporation, which in turn can affect temperature, concentration, and capillary volume. The liquid can be allowed to evaporate, resulting in heat losses and changes in concentration of the liquid 802. A dispenser can deliver supplemental liquid at desired times to keep the volume of the liquid in a desired range, maintain a desired concentration of the liquid, or the like. If the current volume of the liquid is lower than the target equilibrium volume, the controller can instruct the dispenser to deliver liquid until the current volume of the liquid reaches the equilibrium volume. If the current volume of the liquid is higher than the target equilibrium volume, the controller can instruct the dispenser to stop delivering liquid until the current volume of the liquid reaches the equilibrium volume. Once the liquid reaches the target equilibrium volume, the controller can instruct the dispenser to provide the supplemental fluid to the liquid at a desired rate (e.g., a fixed rate or a variable rate), so as to maintain the liquid at the equilibrium volume. The delivery rate can be selected based on the evaporation rate of the liquid.

At 903, the contact surface 679 can have a non-uniform temperature profile such that the upper surface 687 of the slide 243 has a temperature profile that is more uniform than the non-uniform profile of the contact surface 679. Substantially the entire mounting area of the slide 243 can have a substantially uniform profile. This ensures that any portion of a specimen contacting the mounting surface is maintained at a generally uniform temperature for consistent processing. Even if specimens move slightly along the mounting surface, the specimens can be consistently processed.

At 904, heat losses associated with evaporation of the liquid 802 can be compensated for by producing the non-uniform temperature profile along the contact surface 679. The support element 650 and the heating sidewalls 682 can be used to control the temperature of the slide 243.

Fluid manipulated repeatedly across the staining surface results in fluid mixing between different regions within the body of fluid in contact with the slide surface in the sense of both mass as well as thermal energy mixing. Temperature uniformity control across the surface of the slide, therefore, is influenced by the interaction of 1) the conducting heating element under the slide, 2) thermal mixing resulting from fluid manipulation, and 3) evaporative heat loss with respect to the ambient environment. Fluid manipulation is controlled by such factors as manipulation speed and distance with respect to specified volumes. The thermal profile of the conducting element under the slide therefore must be designed appropriately for optimal on-slide temperature uniformity with respect to fluid manipulation factors.

Figure 13 shows the slide holder platen 601, a dispenser assembly 633, and a controller 144 of an evaporation moderated specimen process station. The dispenser assembly 633 includes a fluid source 621 fluidically coupled to a dispenser 622 via a fluid line 623. The fluid source 621 can include, without limitation, one or more containers (e.g., a container taken from a parking or holding station, a container taken from a parking or holding station, etc.), reservoirs, or other suitable fluid sources (e.g., a bulk reagent reservoir) and can include one more valves, pumps, or the like. The dispenser 622 can output liquid via an array of conduits 625. As illustrated in Figure 13, the dispenser 622 includes eight conduits 625, but any number of conduits can be used. Additionally, the dispenser assembly 633 can include more than one dispenser depending on the design of the slide holder platen 601. Additionally or alternatively, dispensers can deliver liquid onto the slides and can be fluidly coupled to the fluid source 621 or another fluid source. The opposable 470 can be positioned to allow one or both of the dispensers 160, 162 to deliver a liquid onto the slide. The dispenser 622 can deliver a bulk liquid from the containers at the parking station 142 and the dispensers 160, 162 deliver liquid from containers at the parking station 140.

The controller 144 is capable of controlling an array of specimen processing stations to keep a volume of a processing liquid within an equilibrium volume range. If the volume of the liquid is above the equilibrium volume range, the liquid can evaporate at a relatively high rate and may significantly change the concentration of the liquid. If the volume of the liquid is below the equilibrium volume range, there may be an insufficient volume of liquid to adequately process the specimen. Additionally, an insufficient volume of liquid can result in an undesirably low amount of liquid agitation during processing. The equilibrium volume range can be selected based on the composition of the liquid, desired processing temperature, or desired agitation of the liquid 802. An equilibrium volume of the liquid 802 can correspond to a fluid volume (at a certain temperature or range of temperatures) that provides full coverage of the specimen while keeping evaporative losses below a target level. The dispenser 622 can function as a replenishment device that periodically supplements the liquid at a fixed rate (e.g., a rate based on the evaporation rate) to keep the volume of the liquid within the equilibrium volume range, replenish depleted reagent, or the like.

With the target processing temperature or target processing temperature range and a total evaporation rate, the controller 144 can determine a target range of equilibrium volumes. The controller 144 can receive the total evaporation rate information from a memory 629 and/or an input device 628. The input device 628 can include a data server or other similar device that can provide information from a database upon request or periodically. The total evaporation rate information can be obtained from an empirical study and stored in the database. The input device 628 can be a reader that obtains information (e.g., a target processing temperature, a target processing temperature range, replenishing rate, etc.) from a label of a slide. The controller 144 can receive information (e.g., look-up tables, temperature set points, duty cycles, power settings, environmental information such as ambient temperatures and/or humidity, processing protocols, etc.) from the memory 629. The input device 628 can be a manual input device (e.g., a keyboard, a touch screen, or the like) or an automated input device (e.g., a computer, a data storage device, servers, network, etc.) that can provide information automatically upon request from the controller 144. The memory 629 can store different instructions for different processes. One stored sequence of program instructions can be used to contact the specimen 807 with a wash and another sequence of program instructions can be used to apply a reagent (e.g., a stain) to the specimen. The controller 144 can include a programmable processor 631 that executes the sequence of program instructions in order to sequentially process the specimen with the wash and reagent. The slide holder platen 601 can heat the slide to a first target temperature when executing the first sequence of program instructions and can cool the slide to a second target temperature when executing the second sequence of program instructions. Any number of sequences of program instructions can be executed to perform different stages of a protocol.

The controller 144 can also be programmed to control the wetting module 430 such that the dispenser 622 delivers the supplemental liquid onto the slide. The rate of fluid delivery can be based on, for example, processing information (e.g., protocol, agitation information, processing time(s), etc.), total evaporation rate information (e.g., evaporation rates under certain conditions, the actual evaporation rate for a certain type of liquid, etc.), or the like. The current volume of the liquid can be determined based on an initial volume of liquid on the slide and stored evaporation rate(s). The stored evaporation rates can be input into the system 100 or determined by the system 100. The controller 144 can calculate the equilibrium volume in advance (e.g., a pilot run), and the system 100 can use the determined equilibrium volume as the initial volume for the same kind of liquids. Then the controller 144 can instruct the dispenser 622 to provide the supplemental liquid at a rate (e.g., a rate determined by the pilot run). The rolling direction, the rolling speed, and the rolling frequency can be adjusted depending on the type of liquids. The rolling speed can have a direct impact on the total evaporation rate. A faster rolling speed can lead to higher evaporation rates. When collecting empirical total evaporation volume information to generate protocols, this can be a factor that is considered.

A power source 627 of the controller 144 can be electrically coupled to a heating element (e.g., heating element 653 of Figures 6A and 6B). The power source 627 can be one or more batteries, fuel cells, or the like. The power source 627 can also deliver electrical energy to other components of the system. The power source 627 can be an AC power supply.

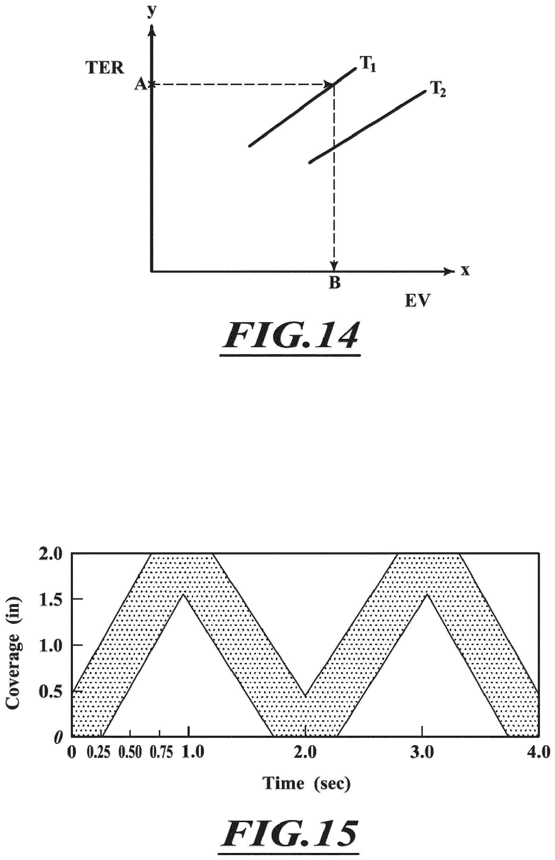

Figure 14 is a plot of equilibrium volume versus total evaporation rate of a processing liquid. The x-axis represents the equilibrium volume (EV, unit: $\mu$L), and the y-axis represents the total evaporation rate (TER, unit: $\mu$L/s). Lines T1 and T2 represent the relationships between the TER and the EV at temperature T1 and temperature T2, respectively. As illustrated, T1 is higher than T2. The controller 144 can receive the total evaporation rate information from the memory 629, the input device 628, or the like. The total evaporation rate information can be measured and stored in the memory 629. The total evaporation rate information can include evaporation rates for liquids at different concentrations. After the controller 144 receives the predetermined temperature (e.g., T1) and the total evaporation rate information (e.g., "A" $\mu$L/s), the controller 144 can determine the EV value (e.g., "B" $\mu$L) of the liquid based on the graph of Figure 14. Equation 1 corresponds to the relationships described in Figure 14. The slope of the lines T1 and T2 represent the temperature-dependent evaporation constant (K) below.

$$TER = K \times EV \qquad\qquad Equation\ 1$$

Once the equilibrium volume of the liquid is determined, the controller 144 can compare it with an estimated volume of the slide and can instruct the dispenser 622 to supply supplemental fluid if needed. If the current volume of the liquid is lower than the target equilibrium volume, the controller 144 can instruct the dispenser 622 to provide more supplemental liquid.

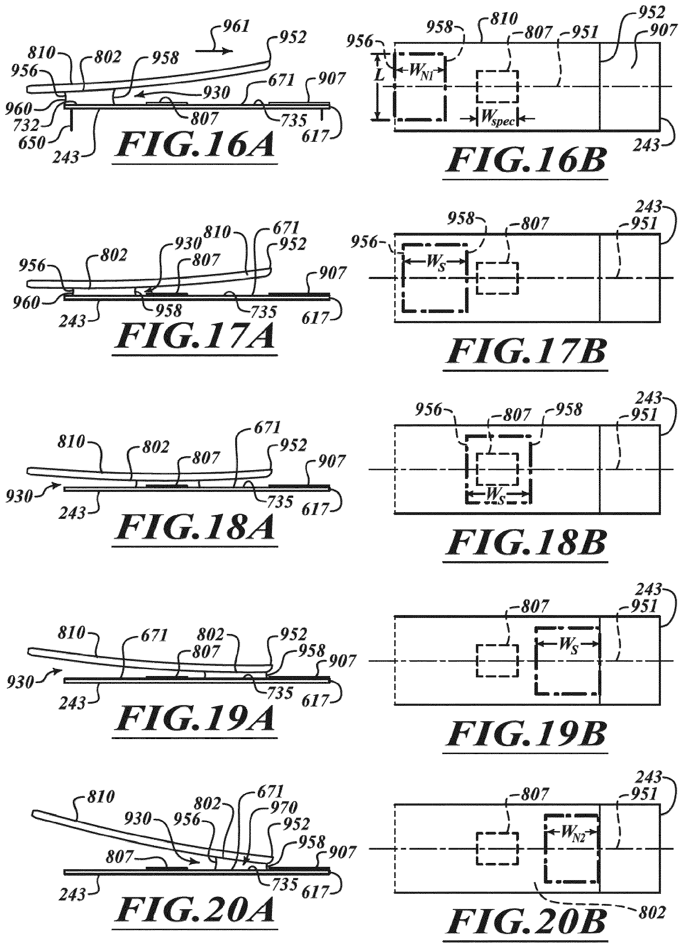

Figure 15 is a plot of time versus coverage of a slide. Figures 16A-20B illustrate one method of achieving the coverage depicted in Figure 15 by moving the liquid 802 along the entire staining area 671 (excluding a label 907 and some margin, if desired) to provide full coverage by being alternatingly moved between opposing ends 732, 735 of the mounting area 671. The full coverage can help minimize, limit, or substantially prevent problems associated with under-wetting and over-wetting. In under-wetting, the liquid 802 contacts less than the entire staining area 671 such that the specimen 807 may be at risk of not being contacted and thus not being treated/stained. In over-wetting, the liquid 802 contacts more than the entire staining area 671 and may tend to drain from the slide 243. The liquid 802 may be at risk of ineffective liquid removal in subsequent processes, resulting in reagent carryover and associated stain quality degradation. If the liquid 802 is a stain, the entire specimen 807 is contacted for consistent (e.g., uniform) staining. If the liquid 802 is a wash, full coverage ensures that the entire specimen 807 is thoroughly washed, especially after a reagent treatment. Different stages of the method are discussed in detail below.

Figures 16A and 16B are side and top views of the band of liquid 802 between the opposable 810 held by the opposable actuator (not shown) and the mounting area end 732 at time 0 in Figure 15. The opposable 810 and slide 243 form a band of liquid 802 (e.g., a meniscus layer, a thin film, or the like). The band of liquid 802 of Figure 16B is shown in phantom line. A gap 930 (e.g., a capillary gap) can have a minimum holding capacity of about 30 microliters to about 350 microliters. Other minimum and maximum holding capacities are possible, if needed or desired and are dependent upon the gap height, opposable radius, fluid properties, and movement speed. The minimum holding capacity can be the smallest volume of liquid that can be contained in the gap 930 and effectively applied to the specimen 807, which may be located anywhere on the staining area 671. The maximum holding capacity is the largest volume of liquid that can be contained in the gap 930 without loss of fluid control, e.g., spilling of fluid over the side edge or outside of the fluid target areas. The varying height gap 930 can accommodate a wider range of liquid volumes than a uniform height gap because the narrowed region of the gap 930 can accommodate a small liquid volume.

The opposable 810 is rolled along the slide 243 to displace the band of liquid 802 (indicated by an arrow 961) in the direction of a longitudinal axis 951 of the slide 243. In Figures 17A and 17B, the band of liquid 802 has been spread by moving a side 958 of the band of liquid 802 in the direction of the longitudinal axis 951 (corresponding to 0.25 seconds in Figure 15). A side 956 of the band of liquid 802 can remain at an edge 960 of the slide 243. The band of liquid 802 can be spread from a narrowed width $W_{N1}$ (Figure 16B) to a spread width $W_S$. The widths $W_{N1}$, $W_S$ can be substantially parallel to the longitudinal axis 951 of the slide 243, and the length L of the band of liquid 802 can be substantially perpendicular to the longitudinal axis 951.

Figures 18A and 18B show the band of liquid 802 after it has moved along the slide 243, corresponding to 0.5 second in Figure 15. The band of liquid 802 is displaced using capillary action. Capillary action can include, without limitation, movement of the band of liquid 802 due to the phenomenon of the liquid spontaneously creeping through the gap 930 due to adhesive forces, cohesive forces, and/or surface tension. The width $W_s$ can be generally maintained while displacing the band of liquid 802. The width $W_s$ may be increased or decreased less than 5% while moving the band of liquid 802. The opposable 810 can have a non-uniform curvature or configuration to have a variable width $W_s$ as the band moves across the slide.

Figures 19A and 19B show the band of liquid 802 positioned at the end 735, corresponding to 0.75 second in Figure 15. The side 958 of the band of liquid 802 can be captivated between an end 952 of the opposable 810 and the end 735 of the mounting area 671. The label 907 can help captivate the liquid 802. For example, the label 907 can be made, in whole or in part, of a hydrophobic material. As the opposable 810 moves to an over-rolled position of Figure 20A, the width $W_S$ of the band of liquid 802 can be decreased to a narrowed width $W_{N2}$, corresponding to 1 second in Figure 15. The width of the band of liquid 802 can be reduced while captivating substantially all of the liquid 802 at an end 970 of the gap 930. For example, at least 90% by volume of the liquid 802 can remain captivated. At least 95% by volume of the liquid 802 can remain captivated. Further, substantially all of the liquid 802 can remain captivated as the width of the band of liquid 802 is decreased.

The compressed width $W_{N2}$ can be substantially less than the width $W_S$ such that the entire narrowed band of liquid 802 is spaced apart from the specimen 807. The narrowed width $W_{N2}$ can be equal to or less than about 50%, 25%, or 10% of the width $W_S$. Such arrangements may be especially well suited to process slides carrying one or more specimens. A relatively large area of the staining area 671 is uncovered by the narrowed band while preventing wicking or escape of the liquid. The width $W_{N2}$ can be equal to or less than about 40%, 30%, or 20% of the width $W_S$. The width $W_{N1}$ can be generally equal to the width $W_{N2}$. Advantageously, the opposable actuator 525 can be operated to increase or decrease to provide variable narrowing of the band of liquid 802.

The opposable 810 of Figures 20A and 20B can be rolled back across the slide 243 to move the band of liquid 802 to the position shown in Figure 16A. The opposable 810 can be rolled back and forth any number of times at a variable rate or constant rate to move the liquid 802 back and forth across the slide 243. If the liquid 802 is a washing liquid, the washing liquid can be rapidly passed back and forth across the specimen 807 to provide thorough washing. If the liquid 802 is a stain, the band of liquid 802 can be passed back and forth across the specimen 807 to provide uniform staining across an entire width $W_{spec}$ (measured in a direction parallel to the longitudinal axis 951 of the slide 243) of the specimen 807. One or more wash cycles can be performed between staining cycles. On-slide mixing can also be performed, if needed or desired.

Processing protocols may require different rolling speeds and different liquid volumes in order to meet various processing criteria (e.g., chemical requirements, uptake requirements, solubility limitations, viscosity, or the like). If the specimen 807 is a paraffm embedded specimen, a relatively small volume of de-waxing solution (e.g., 12 microliters of xylene) can be delivered into the gap 930. The opposable 810 can be rolled (e.g., rolled along an imaginary plane spaced apart from the upper surface of the slide 243, rolled along the upper surface, rolled sideways, rolled longitudinally, or the like) or otherwise manipulated (e.g., rotated, translated, or both) to apply the liquid 802. After dewaxing, a relatively large volume of reagent can be delivered into the gap 930. For example, a volume of about 125 microliters to about 180 microliters of stain can be delivered into the gap 930. The stain is delivered to the specimen 807 and then subsequently removed.

The method shown in Figures 16A-20B can be used to perform assay steps (e.g., antibody and chromogen assays). The assay steps can be performed at relatively low temperatures. The slide holder platen 601 can keep the specimen and/or processing liquid at a temperature in a range of about 35°C to about 40°C. The liquid and/or specimen can be kept at a temperature of about 37°C. The dispenser (e.g., dispenser 622 of Figure 13) can deliver supplemental liquid to maintain a target volume of about 30 to about 350 microliters. In some protocols, the dispenser delivers supplemental liquid at a rate of about 4 to about 5.1 microliters per minute to about 5.6 microliters per minute. The volume of the liquid (e.g., liquid 802 of Figure 10) can be kept in a range of about 90 microliters to about 175 microliters over about a 15 minute period based on a relative humidity of about 10%-90%, an ambient temperature of about 15°C to about 32°C, with an average slide temperature tolerance of about ± 1°C, and an opposable rolling speed of about 25 to 60 millimeters per second. The evaporation rate may be generally proportional to the rolling speed. If the rolling speed is about 20 millimeters per second, a replenish rate of about 3.8 microliters per minute to about 4.2 microliters per minute can maintain a volume of about 115 microliters to about 200 microliters. If the rolling speed is about 40 millimeters per second, a replenish rate of about 5.1 microliters per minute to about 5.6 microliters per minute can maintain a volume of the liquid 802 of about 115 microliters to about 200 microliters. At a high rolling speed of about 90 millimeters per second, the replenish rate can be about 7.6 microliters per minute to about 8.4 microliters per minute to maintain a volume of about 110 microliters to about 200 microliters. Higher speed may be possible but are dependent upon the gap height, opposable radius, and fluid properties. Humidity and ambient temperatures can impact evaporation rates at low temperatures but may not have a significant impact at elevated temperatures of, for example, temperatures greater than 72°C.

For targeted retrieval, the rolling speed can be about 100 millimeters per second and the replenish rate can be 72 microliters per minute. For antigen retrieval, the rolling speed can be about 180 millimeters per second and the replenish rate can be about 105 microliters per minute. Other replenish rates can be selected based on the processing conditions.

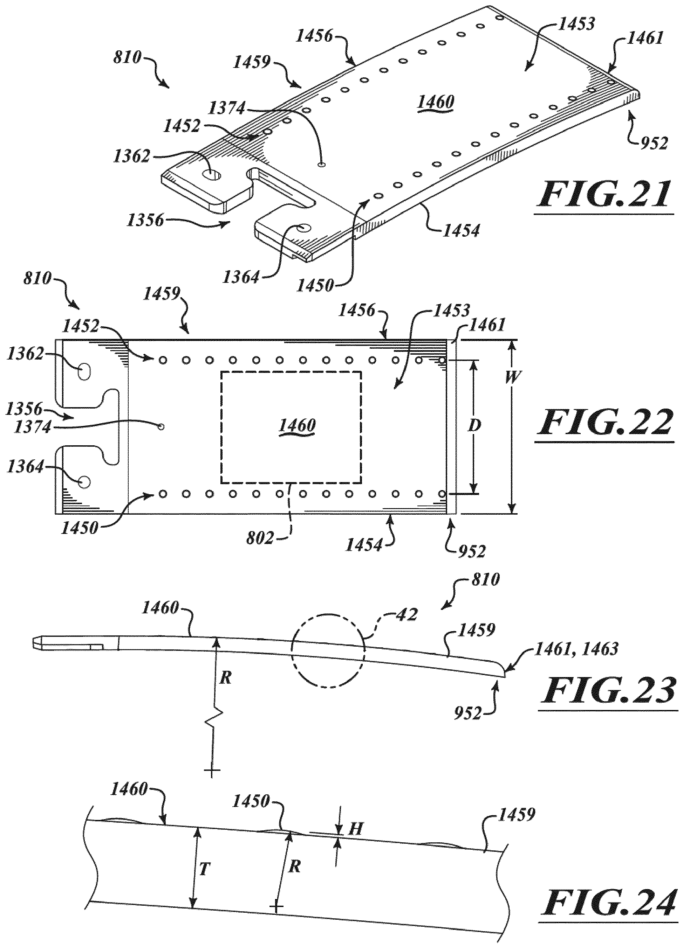

As used herein, the term "opposable element" is a broad term and refers to, without limitation, a surface, a tile, a strip, or another structure capable of manipulating one or more substances to process a specimen on a slide, as described herein. In some embodiments, the opposable element can include one or more spacers, gapping elements or other features for positioning the opposable element relative to a slide. As discussed above, opposable elements can be moved relative to a stationary slide to manipulate a fluid. In other embodiments, a slide is moved relative to a stationary opposable element to manipulate a fluid. In yet other embodiments, both a slide and an opposable element are moved to manipulate a fluid. The opposable 810 (Figures 16A and 16B) and opposable 2012 (Figure 28) are a non-limiting exemplary opposable elements and are discussed in detail in connection with Figures 21-38.

Figures 21-34 show one arrangement of the opposable 810. The opposable 810 can include a body 1459, a port 1374, and a slot 1356. The body 1459 includes a first row of gapping elements 1450, a second row of gapping elements 1452, and a specimen processing region 1453. When the specimen processing region 1453 faces a slide and interfaces with or engages a liquid, the liquid can be removed via the port 1374. The slot 1356 can receive a feature of an opposable actuator. The body 1459 can also include keying features 1362, 1364 (e.g., holes, protrusions, etc.) used to align the opposable 810. The illustrated features 1362, 1364 are holes.

Figure 21 shows the specimen processing region 1453 between the two rows of gapping elements 1450, 1452. The opposable 810 has edges 1454, 1456 that can be dimensioned with respect to the slide to provide the desired processing region 1453 (e.g., the entire surface 1460 of the opposable 810, most of the upper surface 1460 of the opposable 810, the region between the gapping elements 1450, 1452, or the like).

Figure 22 shows en exemplary band of liquid 802 (illustrated in phantom line) positioned between the gapping elements 1450, 1452. The band of liquid 802 can move along the length of the opposable 810 without contacting the gapping elements 1450, 1452. The band of liquid 802 can be displaced without accumulation of liquid about any of the gapping elements 1450, 1452.

The gapping elements 1450, 1452 can help process a specimen with a desired amount of fluid (e.g., a minimal amount of fluid). The gapping elements 1450, 1452 can also be spaced apart from one another to reduce, limit, or substantially prevent wicking between adjacent elements. If the liquid 802 reaches one of the gapping elements 1450, 1452, the liquid 802 can reside at the contact interface between that gapping element and the slide without flowing to an adjacent gapping element. The gapping elements 1450, 1452 are spaced apart from the edges 1454, 1456 of the opposable 810 to keep the liquid proximate to the processing region 1453. Additionally, the liquid 802 is kept far enough away from the edges 1454, 1456 to prevent wicking out from underneath the opposable 810 even if another object contacts the edges 1454, 1456.

The rows of gapping elements 1450, 1452 extend longitudinally along a length of the opposable 810. Opposing gapping elements of each row of gapping elements 1450, 1452 are generally laterally aligned such that a slide can contact laterally aligned gapping elements 1450, 1452. As the opposable 810 is moved along the slide, the slide is successively brought into contact with laterally aligned gapping elements 1450, 1452.

Each of the rows of gapping elements 1450, 1452 can be generally similar to one another. Accordingly, the description of one of the rows of gapping elements 1450, 1452 applies equally to the other, unless indicated otherwise. The row of gapping elements 1450 can include about 5 gapping elements to about 60 gapping elements with an average distance between adjacent gapping elements in a range of about 0.05 inch (1.27 mm) to about 0.6 inch (15.24 mm). As illustrated in Figures 21 and 22, the row of gapping elements 1450 includes 19 gapping elements that protrude outwardly from the entire surface 1460. Otherwise, the row of gapping elements 1450 can include about 10 gapping elements to about 40 gapping elements. As viewed from above (see Figure 22), the row of gapping elements 1450 has a generally linear configuration. Otherwise, the row of gapping elements 1450 can have a zigzag configuration, serpentine configuration, or any other configuration or pattern.

The gapping elements 1450 can be evenly or unevenly spaced from one another. The distance between adjacent gapping elements 1450 can be greater than the heights of the gapping elements 1450 and/or less than a thickness T (Figure 24) of the body 1459 of the opposable 810. Other spacing arrangements are also possible, if needed or desired. The thickness T can be about 0.08 inch (2 mm). A width W between the edges 1454, 1456 can be in a range of about 0.6 inch (15.24 mm) to about 1.5 inch (38 mm). The width W can be about 1.2 inches (30 mm) and the edges 1454, 1456 can be substantially parallel. Other widths are also possible.

Referring to Figure 22, a distance D between the rows 1450, 1452 can be selected based on the dimensions of the specimen and the dimensions of the slide. The distance D can be in a range of about 0.25 inch (6.35 mm) to about 1 inch (25 mm). If the slide is a standard microscope slide, the distance D can be less than about 0.5 inch (12.7 mm).

Figure 24 shows one of the gapping elements 1450. The height H of the gapping element 1450 can be selected based on the ability to manipulate fluid. The gapping element 1450 can have a height H equal to or less than about 0.0015 inch (0.038 mm) if the specimen is a tissue section with a thickness that is less than about 0.0015 inch (0.038 mm). The minimum height of the capillary gap (e.g., gap 930 of Figures 16A-16B) can be equal to 0.0015 inch (0.038 mm) if the gapping elements 1450 contact the slide. The height H can be in a range of about 0.001 inch (0.025 mm) to about 0.005 inch (0.127 mm). The height H can be about 0.003 inch (0.076 mm) (e.g., 0.003 inch $\pm$ 0.0005 inch) to process thin tissue sections with a thickness less than about 30 microns, 20 microns, or 10 microns.

The pattern, number, dimensions, and configurations of the gapping elements 1450, 1452 can be selected based on the desired interaction between the specimen and the liquid. If the opposable 810 includes a field of gapping elements, the gapping elements can be distributed evenly or unevenly across the opposable 810 to form different patterns that may include, without limitation, one or more rows, arrays, geometric shapes, or the like.

The gapping element 1450 can be a partially spherical dimple, partially elliptical dimple, or the like. The illustrated gapping element 1450 is a substantially partially spherical dimple. If the specimen is sufficiently large or moves towards one side of the slide, the gapping element 1450 in the form of a dimple can slide over the specimen without damaging or dislodging the specimen to the slide. Otherwise, the gapping element 1450 can be in the form of a polyhedron protrusion, a conical protrusion, a frustoconical protrusion, or another combination of polygonal and arcuate shapes.

The body 1459 of Figure 23 is in the shape of a simple arc with a radius of curvature R in a range of about 2 inches (5 cm) to about 30 inches (76 cm). The radius of curvature R can be about 15 inches (38 cm) or about 20 inches (74 cm). The nominal radius of the profile deviation can be equal to or less than about 0.1 inch. The actual radius of the profile can deviate less than about 0.01 inch. Such arrangements are well suited to produce a liquid band having a generally rectangular shape, as viewed from above, and also spanning the width of the slide and, for a particular volume, having a low variance in length along the slide. The radius of curvature R can be selected based on the number of specimens to be processed, the amount of fluid agitation, the properties of the processing liquids, the height of gapping elements 1450, 1452, and the like. Otherwise, the opposable 810 can be in the shape of a complex arc (e.g., an elliptical arc), a compound arc, or the like. Yet further, the opposable 810 can be substantially planar. The surface across the width W can be generally straight.

The opposable 810 can be made, in whole or in part, of polymers, plastics, elastomers, composites, ceramics, glass, or metals, as well as any other material that is chemically compatible with the processing fluids and specimen. Exemplary plastics include, without limitation, polyethylene (e.g., high density polyethylene, linear low density polyethylene, blends, or the like), polyvinylidene fluoride (PVDF), polytetrafluoroethylene (PTFE), perfluoroalkoxy (PFA), or combinations thereof. The opposable 810 can be made of a single material. Otherwise, different portions of the opposable 810 can be made of different materials. If the opposable 810 is disposable, it can be made, in whole or in part, of a relatively inexpensive material. If the opposable 810 is rigid, it can be made, in whole or in part, of polycarbonate, urethane, polyester, a metal coated plate, or the like.

Referring again to Figure 23, the end 952 includes a captivation feature in the form of a tapered region 1461. The tapered region 1461 is positioned to captivate the band of liquid. As the opposable 810 is over-rolled, the band of liquid can contact and cling to the tapered region 1461. A curved surface 1463 provides a large surface area to which the liquid can cling. The illustrated tapered region 1461 has a radius of curvature equal to or less than about 2 mm (0.08 inch) to cooperate with a standard microscope slide to captivate a band of liquid. Other radii of curvature can also be used, if needed or desired. The curvature of the rounded edge 1461 can be uniform across the width W of the opposable 810. The curvature of the rounded edge can vary across the width W of the opposable 810.

The opposable 810 can be disposable to prevent cross-contamination. As used herein, the term "disposable" when applied to a system or component (or combination of components), such as an opposable element, a processing liquid, or the like, is a broad term and generally means, without limitation, that the system or component in question is used a finite number of times and is then discarded. Some disposable components, such as an opposable element, are used only once and are then discarded. Multiple components of a processing apparatus can be disposable to further prevent or limit carryover contamination. Otherwise, the components can be non-disposable and can be used any number of times. For example, opposable elements that are non-disposable may be subjected to different types of cleaning and/or sterilization processes without appreciably altering the characteristics of the opposable element.

It is expected that when a volume of fluid on the surface of a slide advances longitudinally in response to capillary forces, currents within the fluid will predominantly align with the direction of movement rather than become randomly oriented. As such, the relevant fluid dynamics may correspond more to a laminar flow regime than to a turbulent flow regime. In a laminar flow regime, lateral mixing (e.g., mixing generally perpendicular to the direction of movement) may be relatively limited. When a volume of fluid is advanced at relatively high speed along a slide using the opposable, the fluid's inertia can cause some of the fluid to flow past the edges of the slide. Although a rough or a textured surface in contact with the fluid can also induce some increased turbulence and increased lateral mixing, it can also cause bubbles to form in the fluid, which can be undesirable, especially in the context of staining reactions.

When a volume of fluid advanced over a slide includes a reactant (e.g., an oxidizing agent, a chromogen, or another suitable histochemical reactant) that is consumed via interaction with a specimen, limited lateral mixing within the fluid may cause undesirable inhomogeneities in the concentration of the reactant. For example, a specimen can have a non-uniform surface area or density of reaction sites across the width of a slide, which can cause a reactant to be depleted at different rates within different regions of a volume of fluid advanced over the slide. Diffusional mixing alone may be inadequate to equilibrate these inhomogeneities. For example, many reactants have relatively high molecular weights and diffuse relatively slowly such that lateral diffusion may be insufficient to equilibrate the concentration of such reactants. Some specimen-processing reactions are highly dependent on reactant concentration. In dynamic fluid protocols, when different regions of a volume of fluid (e.g., a bolus of fluid, a thin film of fluid, etc.) advanced over a specimen have different reactant concentrations, corresponding regions of the specimen can be processed at different rates, resulting in non-uniform specimen processing (e.g., non-uniform staining of a specimen). This can be problematic when relatively uniform specimen processing is desirable. The non-uniform staining is often in the form of a non-random pattern (e.g., a striped pattern) associated with directionality of the fluid movement. In static fluid processing (e.g., incubation), variations in tissue characteristics may lead to processing irregularities. However, such irregularities may result in processing inconsistencies that are significantly less than processing inconsistencies associated with dynamic fluid staining protocols.

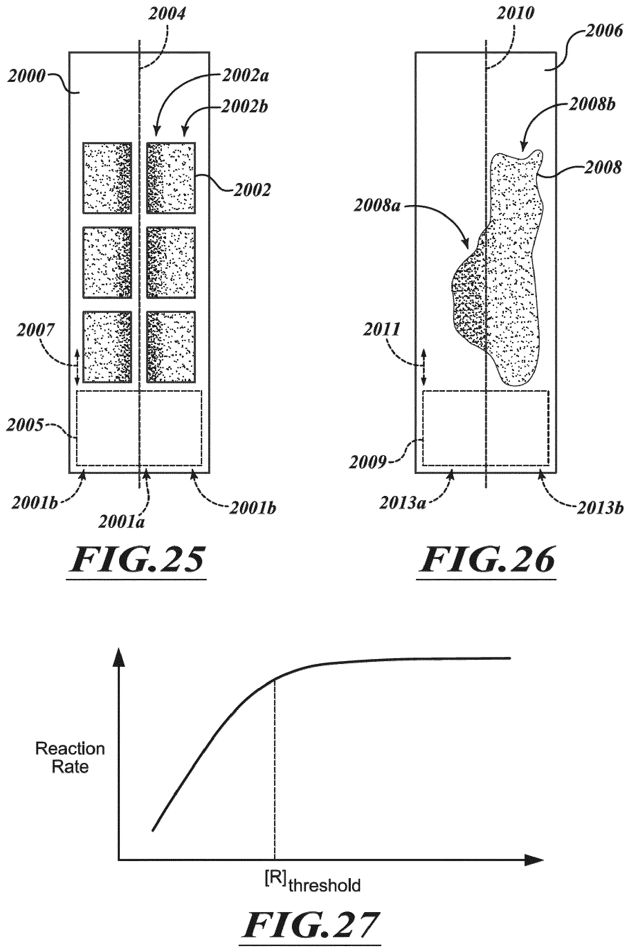

One example of non-uniform staining is illustrated in Figure 25, which is a plan view of a slide 2000 and six rectangular specimens 2002 (one identified) positioned on a surface of the slide 2000. The specimens 2002 are spaced apart from one another and generally symmetrically distributed relative to a bisecting plane 2004. The bisecting plane 2004 extends along the centerline of the slide 2000 and is generally parallel to the length of the slide 2000. Inner regions 2002a (one identified in Figure 25) of the specimens 2002 are closer to the bisecting plane 2004 than outer regions 2002b (one identified) of the specimens 2002. A volume of fluid 2005 (shown in dashed line) can be moved over the slide 2000. For example, the volume of fluid 2005 can be moved longitudinally (indicated by arrow 2007) along the slide 2000. The inner regions 2002a may develop greater stain intensities than the outer regions 2002b. Without wishing to be bound by theory, it is possible that a lack of reaction sites around the bisecting plane 2004 (e.g., the lack of reaction sites in the gaps between laterally adjacent specimens 2002) can cause a localized increase in reactant concentration in a portion of the volume of fluid proximate the bisecting plane 2004 relative to portions of the fluid 2005 further from the bisecting plane 2004. For example, a concentration of the reactant at an inner region 2001a of the fluid 2005 can be greater than a concentration of the reactant at outer regions 2001b of the fluid 2005. This concentration difference can cause the non-uniform staining illustrated in Figure 25.

Another example of non-uniform staining is illustrated in Figure 26, which is a plan view of a slide 2006 and one irregularly shaped specimen 2008 positioned on a surface of the slide 2006. The specimen 2008 is not symmetrical relative to a bisecting plane 2010. In particular, a first region 2008a of the specimen 2008 on one side of the bisecting plane 2010 is smaller than a second region 2008b of the specimen 2008 on the other side of the bisecting plane 2010.

After advancing a volume of fluid 2009 (shown in dashed line) longitudinally over the slide 2006 in the directions indicated by arrow 2011, the first region 2008a may develop greater stain intensity than the second region 2008b. Again, without wishing to be bound by theory, it is possible that a smaller number of reaction sites associated with the first region 2008a relative to the second region 2008b can cause a portion 2013a of the fluid 2009 advanced over the first region 2008a to develop a higher reactant concentration than a portion 2013b of the fluid advanced over the second region 2008b, and that this concentration difference can cause the non-uniform staining illustrated in Figure 26. In still other examples, natural variation in the number and/or type of reaction sites associated with a specimen can cause non-uniform staining even when the specimen is symmetrical relative to a bisecting plane or other reference plane. Other phenomena can also lead to non-uniform staining similar to or different than the non-uniform staining illustrated in Figures 25 and 26.

Figure 27 is a plot of average real-time reactant concentration on the x-axis versus reaction rate on the y-axis for one example of a specimen-processing reaction during a processing period (e.g., while a volume of fluid including a reactant is advanced over a specimen). During the processing period, the specimen-processing reaction gradually consumes the reactant. With many specimen-processing reactions, there is a threshold reactant concentration ($[R]_{threshold}$) above which the reaction is zero order (i.e., generally independent of the reactant concentration) and below which the reaction is not zero order (e.g., first or second order). Thus, in some cases, even if a reactant concentration is depleted to produce varying concentration levels within different portions of a volume of fluid, the reaction rate at different regions of the specimen can remain generally the same so long as the depleted levels remain above $[R]_{threshold}$. Various factors, however, such as reactant cost, solubility, poisoning (e.g., enzyme poisoning), and selectivity, among others, can make it technically challenging and/or undesirable to use relatively high initial reactant concentrations. Thus, the initial reactant concentration within a volume of fluid is often insufficient to prevent the real-time reactant concentration in different portions of the fluid from falling below $[R]_{threshold}$ during a processing period. Furthermore, the number of reaction sites associated with a specimen, the size of the specimen, the distribution of the reaction sites, and other factors that affect reactant depletion often vary widely between specimens and may be impractical to control. Specimens can vary, for example, from a single needle biopsy having an area of about 0.01 square centimeters and relatively low antigen loading to a slice of tissue having an area of about 10 square centimeters and relatively high antigen loading. Lateral mixing of a volume of fluid can facilitate generally uniform processing of single needle biopsies, slices of tissue, and other types of specimens. Opposables can be configured to laterally mix a volume of fluid.

Figures 28, 29, and 30 are, respectively, an isometric view, a top plan view, and a side elevational view of an opposable 2012 configured in accordance with an embodiment of the present technology. Figure 31 is a detailed view of a portion of the opposable 2012. In some cases, the opposable 2012 can provide lateral mixing to at least partially compensate for one or more of the phenomena described above and/or other phenomena associated with non-uniform staining. For example, enhanced lateral mixing in accordance with some embodiments of the present technology can facilitate generally even distribution of a reactant throughout a volume of fluid before, during, or after performing a specimen-processing reaction. Furthermore, enhanced lateral mixing can be useful for achieving uniform temperatures, see Table 1) and concentration profiles throughout a volume of liquid, for increasing rinsing efficiency, for increasing homogenization of fluids after replenishing (e.g., after supplementing the fluids to at least partially compensate for evaporation), and/or for enhancing other suitable processes.

**Table 1**

| 30 Second Intervals | | Slide Temp Variation (Degrees C) | Slide Temp Variation (Degrees C) |
| --- | --- | --- | --- |
| | | Point 1 | Point 2 |
| Opposable with Uniform Spacer Height | Std Dev | 0.6 | 0.7 |
| | % CV | 0.6 | 0.8 |
| Opposable with Varying Spacer Height | Std Dev | *0.3* | *0.3* |
| | % CV | *0.4* | *0.3* |

Referring to Figures 28-31, the opposable 2012 includes a non-planar (e.g., arcuate and/or cambered) body 2014 having a fluid-manipulating surface 2016. The opposable 2012 further includes a first spacer 2018 at a first side portion 2016a of the fluid-manipulating surface 2016, and a second spacer 2020 at a second side portion 2016b of the fluid-manipulating surface 2016. In some embodiments, the first and second spacers 2018, 2020 can include, respectively, first and second pluralities of discrete protrusions 2022 (individually identified as 2022a-z). The protrusions 2022, for example, can be spaced-apart gapping elements, bumps, points, ridges, dams, walls, or other suitable spacing structures.

The fluid-manipulating surface 2016 can include a central or processing region 2016c between the first and second side portions 2016a, 2016b. For example, the first and second side portions 2016a, 2016b can be spaced apart from one another on either side of a bisecting plane 2024 (Figure 29). The bisecting plane 2024 can extend through the central region 2016c, be centrally positioned relative to the width of the fluid-manipulating surface 2016, and be generally parallel to the length of the opposable 2012. The width of the fluid-manipulating surface 2016 can extend across generally the entire distance between the edges 1454, 1456. Otherwise, the width of the fluid-manipulating surface 2016 can extend across only a portion of the distance between the edges 1454, 1456. The body 2014 can be flexible or rigid at the fluid-manipulating surface 2016, and can be made of a molded polymer or another suitable molded or non-molded material.

Figure 32 is a plan view of a slide 2026 suitable for use with the opposable 2012. The slide 2026 can include a specimen-bearing surface 2028 having a first side portion 2028a generally corresponding to the first side portion 2016a of the fluid-manipulating surface 2016, a second side portion 2028b generally corresponding to the second side portion 2016b of the fluid-manipulating surface 2016, and a central region 2028c generally corresponding to the central region 2016c of the fluid-manipulating surface 2016. A specimen 2030 can be positioned on the central region 2028c of the specimen-bearing surface 2028. With reference to Figures 28-32 together, the opposable 2012 and the slide 2026 can be configured to be positioned proximate to one another with the first spacer 2018 at least partially in contact with the first side portion 2028a, and the second spacer 2020 at least partially in contact with the second side portion 2028b.

The opposable 2012 and the slide 2026 can be configured to form a fluid-carrying gap (not shown) between a portion of the central region 2016c of the fluid-manipulating surface 2016 and a corresponding portion of the central region 2028c of the specimen-bearing surface 2028. The central region 2016c can be curved to facilitate controlled manipulation of a fluid (not shown) within the fluid-carrying gap by rolling action (e.g., rolling capillary action). In this way, fluid can be advanced along a processing path 2031 (Figure 32) extending over the specimen 2030. The fluid can be advanced cyclically, such as from a first end portion 2031a of the processing path 2031, over a middle portion 2031b of the processing path 2031, to a second end portion 2031c of the processing path 2031, and then back over the middle portion 2031b to the first end portion 2031a. The central region 2016c can have a radius of curvature R (Figures 30 and 31) from about 2 inches (5.2 cm) to about 30 inches (76.2 cm), from about 10 inches (25.4 cm) to about 20 inches (50.8 cm), or within another suitable range. R can be about 15 inches (38.1 cm). The portions of the central regions 2016c, 2028c forming the fluid-carrying gap can be centered or off-center relative to the bisecting plane 2024. In some embodiments, the fluid-carrying gap is spaced apart from the first spacer 2018 and/or the second spacer 2020. In other embodiments, the fluid-carrying gap can extend to, through, or past the first spacer 2018 and/or the second spacer 2020.

Figure 33 is a partially schematic side elevational view of a specimen-processing assembly 2032 including the opposable 2012 and a platen 2034 configured to support the slide 2026. The opposable 2012 and the slide 2026 (e.g., via the platen 2034) can be configured to interact via a fluid-manipulating action to change the portions of the central regions 2016c, 2028c forming the fluid-carrying gap (e.g., to advance the fluid-carrying gap over the length of the slide 2026). The fluid-manipulating action can include, for example, rotating the opposable 2012 relative to the slide 2026, rotating the slide 2026 relative to the opposable 2012, or both, in a plane of rotation (not shown).

The specimen-processing assembly 2032 can include an actuator 2036 operably connected to the opposable 2012 and to the platen 2034. In other embodiments, the actuator 2036 can be operably connected to the opposable 2012 only, to the platen 2034 only, or have another suitable configuration. The actuator 2036 can be configured to move (e.g., rotate or tilt) the opposable 2012 relative to the platen 2034, to move (e.g., rotate, tilt, etc.) the platen 2034 relative to the opposable 2012, or both, in the plane of rotation. The plane of rotation can be, for example, a plane generally parallel to (e.g., the same as) the bisecting plane 2024 (Figure 29). The specimen-processing assembly 2032 can further include a controller 2038 operably connected to the actuator 2036, and a user interface 2040 operably connected to the controller 2038. The controller 2038 can include a processor 2042 and memory 2044 and can be programmed with instructions (e.g., non-transitory instructions, a sequence of instructions, etc.) that, when executed, cause the actuator 2036 to carry out the fluid-manipulating action.

With reference to Figures 28-33 together, the first and second spacers 2018, 2020 can be configured to vary the profile or cross section of the fluid-carrying gap (e.g., a profile or cross section of the fluid-carrying gap in a direction transverse to the length of the slide 2026) to provide enhanced lateral mixing. The first and second spacers 2018, 2020 can change the orientation of the fluid-manipulating surface 2016 relative to the slide 2026 to produce lateral flows in the volume of fluid. Pairs of protrusions 2022 on opposite sides of the opposable 2012 can have different heights to alter the tilt of at least a portion of the opposable 2012 relative to the slide 2026. In this or another suitable manner, the first and second spacers 2018, 2020 can differentially space apart the first and second side portions 2016a, 2016b of the fluid-manipulating surface 2016 from the first and second side portions 2028a, 2028b of the specimen-bearing surface 2028, respectively, during the fluid-manipulating action. The first spacer 2018 can have a first height profile parallel to the plane of rotation and the second spacer 2020 can have a second height profile parallel to the plane of rotation different than the first height profile. As different protrusions 2022 come into contact with the first and second side portions 2028a, 2028b, respectively, the difference between the first and second height profiles can change the shape of the fluid-carrying gap and thereby cause fluid within the fluid-carrying gap to move laterally. This lateral movement can cause, for example, chaotic advection that can at least partially mitigate the poor lateral mixing often associated with laminar flow regimes.

The first and second height profiles can include a step down and a step up, respectively, toward the edge 1461 (Figure 28). For example, the protrusions 2022h-s can have a first height $H_1$ (Figure 31) and the protrusions 2022a-g and 2022t-z can have a second height $H_2$ (Figure 31), with $H_1$ being less than $H_2$. $H_1$ can be, for example, from about 0.03 mm (0.001 inch) to about 0.1 mm (0.004 inch), from about 0.05 mm (0.002 inch) to about 0.09 mm (0.035 inch), or within another suitable range. $H_1$ can be about 8 mm (0.003 inch). $H_2$ can be, for example, from about 0.1 mm (0.004 inch) to about 0.2 mm (0.008 inch), from about 0.13 mm (0.005 inch) to about 0.18 mm (0.007 inch), or within another suitable range. $H_2$ can be about 0.006 inch. A ratio of $H_1$ to $H_2$ can be, for example, from about 1:1.25 to about 1:3, from about 1:1.5 to about 1:2.5, or within another suitable range. The ratio of $H_1$ to $H_2$ can be about 1:2. Other suitable values for $H_1$, $H_2$, and the ratio of $H_1$ to $H_2$ are also possible. Furthermore, other suitable height profiles are possible. For example, the first height profile, the second height profile, or both can change gradually rather than abruptly. As another example, the first height profile, the second height profile, or both can include more than one height gradient. As yet another example, the first height profile, the second height profile, or both can allow the first side portions 2016a, 2028a to touch while second side portions 2016b, 2028b are spaced apart and/or allow the second side portions 2016b, 2028b to touch while first side portions 2016a, 2028a are spaced apart during at least a portion of the fluid-manipulating action.

The opposable 2012 and the slide 2026 can be moved from a first end state to a second end state and through a range of intermediate states between the first and second end states. Figures 34A, 35A, and 36A are side elevational views of the opposable 2012 and the slide 2026 at the first end state, at an intermediate state within the range of intermediate states, and at the second end state, respectively. Figures 34B, 35B, and 36B are cross-sectional views taken along line 34B-34B in Figure 34A, along the line 35B-35B in Figure 35A, and along the line 36B-36B in Figure 36A, respectively. Figures 34C, 35C, and 36C are enlarged views of a fluid-carrying gap 2046 formed by the opposable 2012 and the slide 2026 in the first end state, the intermediate state, and the second state, respectively, with exaggerated slope shown in Figures 34C and 36C. In some cases, the opposable 2012 can be in a rolling position in the intermediate states and in an over roll or turnaround position in one or both of the first and second end states.

Referring to Figures 34A-36C together, moving from the first end state to the second end state and through the range of intermediate states can cause different portions of the first and second spacers 2018, 2020 come into and out of contact with the first and second side portions 2028a, 2028b of the specimen-bearing surface 2028, respectively. For example, at the first end state (Figures 34A-C), a first portion of the first spacer 2018 (e.g., protrusions 2022a-d) and a first portion of the second spacer 2020 (e.g., protrusions 2022n-q) can be in contact with the specimen-bearing surface 2028. At the second end state (Figures 36A-C), a second portion of the first spacer 2018 (e.g., protrusions 2022j-m) and a second portion of the second spacer 2020 (e.g., protrusions 2022w-z) can be in contact with the specimen-bearing surface 2028. Within the range of intermediate states (one shown in Figures 36A-C), a third portion of the first spacer 2018 (e.g., protrusions 2022e-i) and a third portion of the second spacer 2020 (e.g., protrusions 2022r-v) can be in contact with the specimen-bearing surface 2028. The first and second portions of the first spacer 2018 can be spaced apart along the first side portion 2016a of the fluid-manipulating surface 2016 with the third portion of the first spacer 2018 positioned therebetween. Similarly, the first and second portions of the second spacer 2020 can be spaced apart along the second side portion 2016b of the fluid-manipulating surface 2016 with the third portion of the second spacer 2020 positioned therebetween.

During the fluid-manipulating action, the first and second spacers 2018, 2020 can cause at least a portion of the fluid-manipulating surface 2016 to rotate in a plane that is not parallel to the plane of rotation (e.g., a plane generally perpendicular to the plane of rotation). For example, the opposable 2012 can rock in the lateral direction or tilt from side to side as it is rolled along the slide 2026. In some cases, the fluid-manipulating action includes moving the opposable 2012 and/or the slide 2026 in opposite directions within the plane of rotation. This can reverse the movement of fluid within the fluid-carrying gap 2046 along the processing path 2031 (Figure 32) as well as reverse lateral movement of the fluid caused by the first and second spacers 2018, 2020. For example, the first and second spacers 2018, 2020 can be configured to cause at least a portion of the fluid-manipulating surface 2016 to rotate in a first direction 2048 (Figures 34B and 35B) while the opposable 2012 rotates relative to the slide 2026 in a second direction 2050 (Figures 34A and 35A) different than the first direction 2048 and the opposable 2012 and the slide 2026 move from the first end state toward the second end state. Similarly, the first and second spacers 2018, 2020 can be configured to cause at least a portion of the fluid-manipulating surface 2016 to rotate in a third direction 2052 (Figure 36B) while the opposable 2012 rotates relative to the slide 2026 in a fourth direction 2054 (Figure 36A) different than the third direction 2052 and the opposable 2012 and the slide 2026 move from the second end state toward the first end state. In some embodiments, the first and third directions 2048, 2052 are generally opposite and/or the second and fourth directions 2050, 2054 are generally opposite.

The transverse cross section of the fluid carrying gap 2046 can vary as the opposable 2012 moves to different positions. The transverse cross sections of the fluid carrying gap 2046 can be wedge shaped, triangular shaped, or have other suitable configurations to provide an asymmetrical flow channel. For example, the flow channel can have an asymmetrical cross section when the opposable 2012 moves towards the over rolled position (Figure 36A) and a symmetrical cross section when the opposable 2012 is in an intermediate position (Figure 35A). In some cases, lateral mixing can be performed primarily at one or both turnaround portions of the rolling motion. In other cases, lateral mixing can be performed relatively consistently throughout the rolling motion. The overall geometry of the flow channel (e.g., the three-dimensional space through which the fluid-carrying gap 2046 moves during the fluid-manipulating action) can have various suitable shapes, such as shapes that have generally equal volumes on either side of the bisecting plane 2024 (Figure 29) and shapes that have different volumes on either side of the bisecting plane 2024. At least a portion of the flow channel can have a substantially saddle shape, partially spherical shape, partially frusto-conical shape, generally triangular shape or wedge shape, or the like. Different portions of the flow channel can have different shapes. Different portions of the opposable 2012 can have non-planar configurations (e.g., saddle shaped, partially spherical shape, partially frusta-conical shape, etc.), planar configurations, or the like to define such flow channels.

In some embodiments, the first and second spacers 2018, 2020 can be configured to cause a cross section of the fluid-carrying gap 2046 in a first plane perpendicular to the plane of rotation (e.g., a plane corresponding to line 34B-34B in Figure 34A) to have a first asymmetry relative to the bisecting plane 2024 (Figure 29) when the opposable 2012 and the slide 2026 are in the first end state. Similarly, the first and second spacers 2018, 2020 can be configured to cause a cross section of the fluid-carrying gap 2046 in a second plane perpendicular to the plane of rotation (e.g., a plane corresponding to line 36B-36B in Figure 36A) to have a second asymmetry relative to the bisecting plane 2024 when the opposable 2012 and the slide 2026 are in the second end state. The first and second asymmetries can be generally opposite relative to one another. The first asymmetry can correspond to a volumetric taper of the fluid-carrying gap 2046 in a first direction toward the first spacer 2018, and the second asymmetry can correspond to a volumetric taper of the fluid-carrying gap 2046 in a second direction toward the second spacer 2020. The changing volumetric taper of the fluid-carrying gap 2046 can cause fluid (and reactants) within the fluid-carrying gap 2046 to move in a direction opposite to the direction of the volumetric taper due to displacement and/or to move in the direction of the volumetric taper due to capillary action. For clarity purposes, the fluid is not shown in Figures 34B, 35B, 36B, although the fluid can be located at fluid gap F. Both types of movement can enhance lateral mixing of the fluid. The changing volumetric taper of the fluid-carrying gap 2046 can also have other additional and/or alternative effects on the fluid within the fluid-carrying gap 2046 that can enhance lateral mixing of the fluid and/or have other benefits.

The height profiles of the spacers 2018, 2020 can be selected to cause generally even lateral mixing of fluid in opposite directions. The height profiles of the spacers 2018, 2020 on opposite sides of the opposable are different. This can cause a lateral mixing effect that occurs when the opposable 2012 moves from the first state to the second state to be generally reversed when the opposable 2012 and the slide 2026 move from the second state back to the first state. When the first portion of the first spacer 2018 has an average height greater than that of the first portion of the second spacer 2020, and the second portion of the first spacer 2018 has an average height less than that of the first portion of the second spacer 2020, an average height of the first and second portions together of the first spacer 2018 can be about equal to an average height of the first and second portions together of the second spacer 2020. An average height of the third portion of the first spacer 2018 can also be about equal to an average height of the third portion of the second spacer 2020. These attributes can facilitate generally symmetrical volumetric distribution relative to a plane (e.g., a bisecting plane not shown) perpendicular to the bisecting plane 2024 (Figure 29). Furthermore, they can cause the fluid-carrying gap 2046 to be relatively symmetrical while it passes over the central region of the slide 2026, which carries the specimen 2030. This can increase the volumetric consistency of portions of the fluid proximate different regions of the specimen 2030.

As discussed above, enhanced lateral mixing can facilitate more uniform staining of specimens. For example, in at least some enzymatic staining reactions, enhanced lateral mixing can allow for acceptable levels of stain uniformity across a broad range of specimen variation without using initial reactant concentrations high enough to poison the enzyme. In one illustrative example, the specimen 2030 (Figure 32) can have different antigen loads on opposite sides of a bisecting plane (not shown) parallel to the processing path 2031. The antigen load on one side of the bisecting plane can be, for example, from about 50% to about 500%, from about 100% to about 300%, or within another suitable range greater than the antigen load on the other side of the bisecting plane.

The opposable 2012 can be used to advance a fluid including a reactant (e.g., an oxidizing agent, such as hydrogen peroxide) along with another reactant (e.g., a chromogen, such as 3,3'-diaminobenzidine) over the specimen 2030. The fluid can be advanced, for example, at a speed from about 10 millimeters/second to about 40 millimeters/second, from about 20 millimeters/second to about 30 millimeters/second, or within another suitable range. In some cases, the fluid is advanced at a speed of about 25 millimeters/second. The fluid can have a volume, for example, from about 50 microliters to about 250 microliters, from about 75 microliters to about 125 microliters, or within another suitable range. In some cases, the fluid has a volume of about 100 microliters. The concentration of one or both of the reactants can be from about 100% to about 300%, from about 100% to about 200%, or within another suitable range of a minimum concentration for generally maintaining an enzymatic staining reaction at zero order. When the reactant is an oxidizing agent (e.g., hydrogen peroxide), higher concentrations of the reactant can, in some cases, poison enzymes (e.g., horseradish peroxidase) bound to the antigens on the specimen 2030 via antibodies.

The opposable 2012 can also be used to perform on slide mixing, a feature heretofore not possible with flat surface capillary gap systems. A small volume of a concentrated reagent or reagent in a storage buffer can be aspirated into a reagent pipette from a vial. This reagent is transported to, and dispensed on, the slide. A larger volume of a diluent fluid is dispensed through the pipette onto the slide to dilute the reagent and provide the bulk of the fluid to satisfy the target volume requirements. It has also been found that the use of a non-buffered fluid can be added to a wide variety of reagents without changing their chemical dynamics. This process can also be used to modify the ratio of chromogen reagents (or other mix ratios) by selectively diluting some components while leaving others at their starting concentration. This process can also be used to enhance intentional stain intensity. For many steps, final stain intensity can be adjusted by modifying the on-slide concentration on the fly. Once the target reagent and dilution volume is on the slide, the opposable can provide mixing of the laminar reagent and diluent providing even distribution over the surface of the slide. Since the reagents applied in this manner are dropped sequentially onto the slide, they form relatively discrete layers on the slide which promotes mixing via the orthogonal movement of the opposable and opposable actuator assembly.

Figures 37 and 38 are plan views of the slides 2000, 2006 with specimens processed with the opposable 2012. In contrast to the stain non-uniformity illustrated in Figures 43 and 44, Figures 55 and 56 illustrate examples of relatively uniform staining. Due at least in part to enhanced lateral mixing, after staining, the specimens 2002 (Figure 37) and 2008 (Figure 38) can have stain-intensity gradients less than about 15%, less than about 10%, or within another suitable range. In some cases, the specimens 2002, 2008 have stain-intensity gradients of about 5% and/or stain-intensity gradients generally undetectable to the naked eye. Other beneficial staining outcomes are also possible. Opposables 2012 can be used with the system 100 to achieve substantially uniform processing across one or more specimen.

The slides disclosed herein can be a 1 inch x 3 inch microscope slide, a 25 mm x 75 mm microscope slide, or another type of flat or substantially flat substrate. "Substantially flat substrate" refers, without limitation, to any object having at least one substantially flat surface, but more typically to any object having two substantially flat surfaces on opposite sides of the object, and even more typically to any object having opposed substantially flat surfaces, which opposed surfaces are generally equal in size but larger than any other surfaces on the object. The substantially flat substrate can comprise any suitable material, including plastics, rubber, ceramics, glass, silicon, semiconductor materials, metals, combinations thereof, or the like. Non-limiting examples of substantially flat substrates include flat covers, SELDI and MALDI chips, silicon wafers, or other generally planar objects with at least one substantially flat surface.

From the foregoing, it will be appreciated that specific embodiments of the invention have been described herein for purposes of illustration, but well-known structures and functions have not been shown or described in detail to avoid unnecessarily obscuring the description of at least some embodiments of the invention. The systems described herein can perform a wide range of processes for preparing biological specimens for analysing. Where the context permits, singular or plural terms may also include the plural or singular term, respectively. Unless the word "or" is associated with an express clause indicating that the word should be limited to mean only a single item exclusive from the other items in reference to a list of two or more items, then the use of "or" in such a list shall be interpreted as including (a) any single item in the list, (b) all of the items in the list, or (c) any combination of the items in the list. The singular forms "a," "an," and "the" include plural referents unless the context clearly indicates otherwise. Thus, for example, reference to "a specimen" refers to one or more specimens, such as two or more specimens, three or more specimens, or four or more specimens.

## Claims

1. An opposable (2012) for specimen (2008, 2030) processing, including
   a body (2014) having a non-planar fluid-manipulating surface (2016), wherein the fluid (2005, 2009) is a liquid; and
   at least two spacer elements coupled to the body (2014) and configured to space the fluid-manipulating surface (2016) from a slide (2026) to define a fluid-carrying gap (2046) between the fluid-manipulating surface (2016) and the slide (2026);
   **characterized in that** the spacer elements include
   a first spacer (2018) at a first side portion (2016a) of the fluid-manipulating surface (2016), and
   a second spacer (2020) at a second side portion (2016b) of the fluid-manipulating surface (2016), the second side portion (2016b) being spaced apart from the first side portion (2016a),
   wherein a section of the height profile of the first spacer (2018) and a section of the height profile of the second spacer (2020) on opposite sides of the opposable (2012) are different.

2. A specimen-processing assembly (2032), comprising:

   an opposable (2012) of claim 1; and

an actuator (2036) configured to change a position of the opposable (2012) relative to the slide (2026) or to change the position of the slide (2026) relative to the opposable (2012) to move a volume of fluid (2005) in a first direction (2048) along the slide (2026) while the spacer element contacts the slide (2026) to vary a cross section of the fluid-carrying gap (2046) in a plane that is substantially perpendicular to the first direction (2048) and to move a volume of the fluid (2009) in a second direction (2050) along the slide (2026) while the spacer element contacts the slide (2026) to vary the cross section of the fluid-carrying gap (2046) in a plane that is substantially perpendicular to the second direction (2048, 2050).

3. The specimen-processing assembly (2032) of claim 2, wherein:

the actuator (2036) is configured to rotate at least one of the opposable (2012) in a plane of rotation; the spacer elements include a plurality of first gapping elements (1450) at the first side portion (2016a) of the fluid-manipulating surface (2016) and a plurality of second gapping elements (1452) at the second side portion (2016b) of the fluid-manipulating surface (2016); and the plurality of first gapping elements (1450) maintain a spacing between the body (2014) of the opposable (2012) and the slide (2026) and define a first height profile parallel to the plane of rotation, and the plurality of the second gapping elements (1452) define a second height profile parallel to the plane of rotation that is different from the first height profile.

4. The specimen-processing assembly (2032) of claim 2, further comprising:

a platen (2034) configured to support a slide (2026) having a specimen-bearing surface (2028);

wherein
the opposable (2012) further includes an arcuate body (2014) having the fluid-manipulating surface (2016), the actuator (2036) is configured to move the opposable (2012) relative to the platen (2034), to move the platen (2034) relative to the opposable (2012), or both in a plane of rotation, the first and second side portions being generally parallel to the plane of rotation, wherein the first spacer (2018) has a height profile parallel to the plane of rotation different than a height profile of the second spacer (2020) parallel to the plane of rotation.

5. The specimen-processing assembly (2032) of claim 4, wherein:

the first spacer (2018) includes a first plurality of discrete protrusions (2022) configured to contact the specimen-bearing surface (2028); and
the second spacer (2020) includes a second plurality of discrete protrusions (2022) configured to contact the specimen-bearing surface (2028).

6. The specimen-processing assembly (2032) of claim 4, wherein:

the actuator (2036) is configured to rotate the opposable (2012) relative to the platen (2034), to rotate the platen (2034) relative to the opposable (2012), or both from a first end state to a second end state and through a range of intermediate states between the first and second end states;
the body (2014) is configured to form a fluid-carrying gap (2046) between a portion of a central region (2016c) of the fluid-manipulating surface (2016) and a corresponding portion of a central region (2028c) of the specimen-bearing surface (2028);
rotating the opposable (2012) relative to the platen (2034), rotating the platen (2034) relative to the opposable (2012), or both changes the portion of the central region (2016c) of the fluid-manipulating surface (2016) and the corresponding portion of the central region (2028c) of the specimen-bearing surface (2028) forming the fluid-carrying gap (2046);
the first and second spacers (2018, 2020) are configured
to cause a cross section of the fluid-carrying gap (2046) in a first plane perpendicular to the plane of rotation to have a first asymmetry at the first end state relative to a bisecting plane (2004, 2010, 2014) parallel to the plane of rotation, and
to cause a cross section of the fluid-carrying gap (2046) in a second plane perpendicular to the plane of rotation to have a second asymmetry relative to the bisecting plane (2004, 2010, 2014) at the second end state; and
the first asymmetry is different than the second asymmetry.

7. The specimen-processing assembly (2032) of claim 4, wherein the first and second spacers (2018, 2020) are configured to cause at least a portion of the fluid-manipulating surface (2016) to perpendicularly rotate relative to the plane of rotation while the actuator (2036) rotates the opposable (2012) relative to the platen (2034), rotates the platen (2034) relative to the opposable (2012), or both in the plane of rotation.

8. The specimen-processing assembly (2032) of claim 4, wherein:

the actuator (2036) is configured to rotate the opposable (2012) relative to the platen (2034), to rotate the platen (2034) relative to the opposable (2012), or both from a first end state at which a first portion of the first spacer (2018) and a first portion of the second spacer (2020) contact the specimen-bearing surface (2028) to a second end state at which a second portion of the first spacer (2018) and a second portion of the second spacer (2020) contact the specimen-bearing surface (2028);

the first portion of the first spacer (2018) is spaced apart from the second portion of the first spacer (2018) at the first side portion (2016a) of the fluid-manipulating surface (2016);

the first portion of the second spacer (2020) is spaced apart from the second portion of the second spacer (2020) at the second side portion (2016b) of the fluid-manipulating surface (2016);

an average height of the first portion of the first spacer (2018) is greater than an average height of the first portion of the second spacer (2020); and

an average height of the second portion of the first spacer (2018) is less than an average height of the second portion of the second spacer (2020).

9. The specimen-processing assembly (2032) of claim 8, wherein an average height of a third portion of the first spacer (2018) between the first and second portions of the first spacer (2018) is about equal to an average height of a third portion of the second spacer (2020) between the first and second portions of the second spacer (2020).

10. A system comprising:

the opposable (2012) of claim 1;
a slide (2026);
a platen (2034) configured to support the slide (2026); and
an actuator (2036) configured to rotate the opposable (2012) relative to the platen (2034), to rotate the platen (2034) relative to the opposable (2012), or both from a first end state to a second end state and through a range of intermediate states between the first and second end states in a plane of rotation, wherein

in the first end state, the first and second spacers (2018, 2020) are configured to differentially space apart the first and second side portions (2016a, 2016b) of the fluid-manipulating surface (2016) from the first and second side portions (2028a, 2028b) of the specimen-bearing surface (2028), respectively, so as to cause the fluid-carrying gap (2046) to volumetrically taper in a second direction (2050), and

in the second end state, the first and second spacers (2018, 2020) are configured to differentially space apart the first and second side portions (2016a, 2016b) of the fluid-manipulating surface (2016) from the first and second side portions (2028a, 2028b) of the specimen-bearing surface (2028), respectively, so as to cause the fluid-carrying gap (2046) to volumetrically taper in a third direction (2052) different than the first direction (2048).

11. A method for processing a specimen (2008, 2030), comprising:

forming a fluid-carrying gap (2046) between a fluid-manipulating surface (2016) of an arcuate body (2014) of an opposable (2012) and a specimen-bearing surface (2028) of a slide (2026) proximate the opposable (2012) by using at least two spacer elements, wherein the fluid (2005, 2009) is a liquid,

the spacer elements include a first spacer (2018) at a first side portion (2016a) of the fluid-manipulating surface (2016), and a second spacer (2020) at a second side portion (2016b) of the fluid-manipulating surface (2016), the second side portion (2016b) being spaced apart from the first side portion (2016a), and a section of the height profile of the first spacer (2018) and a section of the height profile of the second spacer (2020) on opposite sides of the opposable (2012) are different; and

changing a relative position of the opposable (2012) relative to the slide (2026) in a plane of rotation to advance a volume of fluid (2005, 2009) within the fluid-carrying gap (2046) over a processing path (2031) extending over a specimen (2008, 2030) at the specimen-bearing surface (2028) and to change a volumetric asymmetry of the fluid-carrying gap (2046) relative to a bisecting plane (2004, 2010, 2014) parallel to the plane of rotation.

12. The method of claim 11, further comprising inducing mixing of the fluid (2005, 2009) in a lateral direction generally perpendicular to the processing path (2031) by changing the volumetric asymmetry of the fluid-carrying gap (2046).

13. The method of claim 11, wherein changing the volumetric asymmetry of the fluid-carrying gap (2046) includes changing a volumetric taper of the fluid-carrying gap (2046) in a direction generally perpendicular to the processing path (2031).

14. The method of claim 11, wherein:

the processing path (2031) includes a first end portion (2031a), a second end portion (2031c), and a middle portion (2031b) between the first and second end portions (2031a, 2031c);
the fluid-carrying gap (2046) has a first volumetric asymmetry relative to the bisecting plane (2004, 2010, 2014) when the fluid (2005, 2009) is at the first end portion (2031a) of the processing path (2031);
the fluid-carrying gap (2046) has a second volumetric asymmetry relative to the bisecting plane (2004, 2010, 2014) when the fluid (2005, 2009) is at the second end portion (2031c) of the processing path (2031); and
the first volumetric asymmetry is generally opposite to the second volumetric asymmetry.

15. The method of claim 11, further comprising perpendicularly rotating at least a portion of the fluid-manipulating surface (2016) relative to the plane of rotation while rotating the opposable (2012) relative to the slide (2026), rotating the slide (2026) relative to the opposable (2012), or both in the plane of rotation.

16. The method of claim 11, further comprising:

simultaneously rotating at least a portion (2016a, 2016b) of the fluid-manipulating surface (2016) in a first direction (2048) and rotating the opposable (2012) relative to the slide (2026), rotating the slide (2026) relative to the opposable (2012), or both in a second direction (2050); and
simultaneously rotating at least a portion (2016a, 2016b) of the fluid-manipulating surface (2016) in a third direction (2052) and rotating the opposable (2012) relative to the slide (2026), rotating the slide (2026) relative to the opposable (2012), or both in a fourth direction (2054),
wherein
the first, second, third, and fourth directions (2048, 2050, 2052, 2054) are different,
the first direction (2048) is generally opposite to the third direction (2052), and
the second direction (2050) is generally opposite to the fourth direction (2054).

17. The method of claim 11, wherein:

the specimen (2008, 2030) to one side of the bisecting plane (2004, 2010, 2014) has a first antigen load;
the specimen (2008, 2030) to the opposite side of the bisecting plane (2004, 2010, 2014) has a second antigen load;
the second antigen load is from about 100% to about 300% greater than the first antigen load;
the method further includes staining the specimen (2008, 2030) by advancing the fluid (2005, 2009) over the processing path (2031); and
changing the volumetric asymmetry of the fluid-carrying gap (2046) increases a staining uniformity of the specimen (2008, 2030) after staining the specimen (2008, 2030).

**Patentansprüche**

1. Gegenstück (2012) zur Verarbeitung von Proben (2008, 2030), das Folgendes beinhaltet:

einen Körper (2014) mit einer nichtebenflächigen Fluidmanipulationsoberfläche (2016), wobei das Fluid (2005, 2009) eine Flüssigkeit ist; und
wenigstens zwei Abstandhalterelemente, die mit dem Körper (2014) gekoppelt und dazu konfiguriert sind, die Fluidmanipulationsoberfläche (2016) von einem Objektträger (2026) zu beabstanden, um einen fluidhaltenden Spalt (2046) zwischen der Fluidmanipulationsoberfläche (2016) und dem Objektträger (2026) zu definieren; **dadurch gekennzeichnet, dass** die Abstandhalterelemente Folgendes beinhalten:

einen ersten Abstandhalter (2018) an einem ersten Seitenteil (2016a) der Fluidmanipulationsoberfläche (2016), und

einen zweiten Abstandhalter (2020) an einem zweiten Seitenteil (2016b) der Fluidmanipulationsoberfläche (2016), wobei der zweite Seitenteil (2016b) von dem ersten Seitenteil (2016a) beabstandet ist, wobei sich ein Abschnitt des Höhenprofils des ersten Abstandhalters (2018) und ein Abschnitt des Höhenprofils des zweiten Abstandhalters (2020) auf gegenüberliegenden Seiten des Gegenstücks (2012) unterscheiden.

2. Probenverarbeitungsanordnung (2032), die Folgendes umfasst:

ein Gegenstück (2012) nach Anspruch 1; und

einen Aktor (2036), der dazu konfiguriert ist, eine Position des Gegenstücks (2012) relativ zu dem Objektträger (2026) zu ändern oder die Position des Objektträgers (2026) relativ zu dem Gegenstück (2012) zu ändern, um ein Volumen eines Fluids (2005) in einer ersten Richtung (2048) entlang des Objektträgers (2026) zu bewegen, während das Abstandhalterelement den Objektträger (2026) berührt, um einen Querschnitt des fluidhaltenden Spalts (2046) in einer Ebene, die im Wesentlichen senkrecht zu der ersten Richtung (2048) ist, zu variieren und um ein Volumen des Fluids (2009) in einer zweiten Richtung (2050) entlang des Objektträgers (2026) zu bewegen, während das Abstandhalterelement den Objektträger (2026) berührt, um den Querschnitt des fluidhaltenden Spalts (2046) in einer Ebene, die im Wesentlichen senkrecht zu der zweiten Richtung (2048, 2050) ist, zu variieren.

3. Probenverarbeitungsanordnung (2032) nach Anspruch 2, wobei:

der Aktor (2036) dazu konfiguriert ist, wenigstens eines der Gegenstücke (2012) in einer Drehebene zu drehen; das Abstandhalterelement mehrere erste Spaltbildungselemente (1450) an dem ersten Seitenteil (2016a) der Fluidmanipulationsoberfläche (2016) und mehrere zweite Spaltbildungselemente (1452) an dem zweiten Seitenteil (2016b) der Fluidmanipulationsoberfläche (2016) beinhaltet; und

die mehreren ersten Spaltbildungselemente (1450) eine Beabstandung zwischen dem Körper (2014) des Gegenstücks (2012) und dem Objektträger (2026) aufrechterhalten und ein erstes Höhenprofil parallel zu der Drehebene definieren und die mehreren zweiten Spaltbildungselemente (1452) ein zweites Höhenprofil parallel zu der Drehebene definieren, das sich von dem ersten Höhenprofil unterscheidet.

4. Probenverarbeitungsanordnung (2032) nach Anspruch 2, die ferner Folgendes umfasst:

eine Trägerplatte (2034), die dazu konfiguriert ist, einen Objektträger (2026) mit einer probentragenden Oberfläche (2016) zu stützen; wobei

das Gegenstück (2012) ferner einen gekrümmten Körper (2014) mit der Fluidmanipulationsoberfläche (2016) beinhaltet,

der Aktor (2036) dazu konfiguriert ist, das Gegenstück (2012) relativ zu der Trägerplatte (2034) zu bewegen, die Trägerplatte (2034) relativ zu dem Gegenstück (2012), oder beide in einer Drehebene, zu bewegen, wobei der erste und der zweite Seitenteil allgemein parallel zu der Drehebene sind,

wobei der erste Abstandhalter (2018) ein Höhenprofil parallel zu der Drehebene aufweist, das sich von einem Höhenprofil des zweiten Abstandhalters (2020) parallel zu der Drehebene unterscheidet.

5. Probenverarbeitungsanordnung (2032) nach Anspruch 4, wobei:

der erste Abstandhalter (2018) mehrere erste diskrete Ausbuchtungen (2022) aufweist, die dazu konfiguriert sind, die probentragende Oberfläche (2028) zu berühren; und

der zweite Abstandhalter (2020) mehrere zweite diskrete Ausbuchtungen (2022) aufweist, die dazu konfiguriert sind, die probentragende Oberfläche (2028) zu berühren.

6. Probenverarbeitungsanordnung (2032) nach Anspruch 4, wobei:

der Aktor (2036) dazu konfiguriert ist, das Gegenstück (2012) relativ zu der Trägerplatte (2034) zu drehen, die Trägerplatte (2034) relativ zu dem Gegenstück (2012), oder beide von einem ersten Endzustand in einen zweiten Endzustand und durch einen Bereich von Zwischenzuständen zwischen dem ersten und zweiten Endzustand, zu drehen;

der Körper (2014) dazu konfiguriert ist, einen fluidhaltenden Spalt (2046) zwischen einem Teil eines zentralen Gebiets (2016c) der Fluidmanipulationsoberfläche (2016) und einem entsprechenden Teil eines zentralen Gebiets (2028c) der probentragenden Oberfläche (2028) zu bilden;

Drehen des Gegenstücks (2012) relativ zu der Trägerplatte (2034), Drehen der Trägerplatte (2034) relativ zu dem Gegenstück (2012), oder beider, den Teil des zentralen Gebiets (2016c) der Fluidmanipulationsoberfläche (2016) und den entsprechenden Teil des zentralen Gebiets (2028c) der probentragenden Oberfläche (2028), die den fluidhaltenden Spalt (2046) bilden, ändert;

der erste und der zweite Abstandhalter (2018, 2020) zu Folgendem konfiguriert sind:

Bewirken, dass ein Querschnitt des fluidhaltenden Spalts (2046) in einer ersten Ebene senkrecht zu der Drehebene in dem ersten Endzustand eine Asymmetrie relativ zu einer halbierenden Ebene (2004, 2010, 2014) parallel zu der Drehebene aufweist, und

Bewirken, dass ein Querschnitt des fluidhaltenden Spalts (2046) in einer zweiten Ebene senkrecht zu der Drehebene in dem zweiten Endzustand eine zweite Asymmetrie relativ zu der halbierenden Ebene (2004, 2010, 2014) aufweist; und

die erste Asymmetrie sich von der zweiten Asymmetrie unterscheidet.

7. Probenverarbeitungsanordnung (2032) nach Anspruch 4, wobei der erste und der zweite Abstandhalter (2018, 2020) dazu konfiguriert sind, zu bewirken, dass sich wenigstens ein Teil der Fluidmanipulationsoberfläche (2016) senkrecht zu der Drehebene dreht, während der Aktor (2036) das Gegenstück (2012) relativ zu der Trägerplatte (2034) dreht, die Trägerplatte (2034) relativ zu dem Gegenstück (2012), oder beide in der Drehebene, dreht.

8. Probenverarbeitungsanordnung (2032) nach Anspruch 4, wobei:

der Aktor (2036) dazu konfiguriert ist, das Gegenstück (2012) relativ zu der Trägerplatte (2034) zu drehen, die Trägerplatte (2034) relativ zu dem Gegenstück (2012), oder beide von einem ersten Endzustand, bei dem ein erster Teil des ersten Abstandhalters (2018) und

ein erster Teil des zweiten Abstandhalters (2020) die probentragende Oberfläche (2028) berühren, in einen zweiten Endzustand, bei dem ein zweiter Teil des ersten Abstandhalters (2018) und ein zweiter Teil des zweiten Abstandhalters (2020) die probentragende Oberfläche (2028) berühren, zu drehen;

der erste Teil des ersten Abstandhalters (2018) von dem zweiten Teil des ersten Abstandhalters (2018) an dem ersten Seitenteil (2016a) der Fluidmanipulationsoberfläche (2016) beabstandet ist;

der erste Teil des zweiten Abstandhalters (2020) von dem zweiten Teil des zweiten Abstandhalters (2020) an dem zweiten Seitenteil (2016b) der Fluidmanipulationsoberfläche (2016) beabstandet ist;

eine durchschnittliche Höhe des ersten Teils des ersten Abstandhalters (2018) größer als eine durchschnittliche Höhe des ersten Teils des zweiten Abstandhalters (2020) ist; und

eine durchschnittliche Höhe des zweiten Teils des ersten Abstandhalters (2018) kleiner als eine durchschnittliche Höhe des zweiten Teils des zweiten Abstandhalters (2020) ist.

9. Probenverarbeitungsanordnung (2032) nach Anspruch 8, wobei eine durchschnittliche Höhe eines dritten Teils des ersten Abstandhalters (2018) zwischen dem ersten und dem zweiten Teil des ersten Abstandhalters (2018) etwa gleich einer durchschnittlichen Höhe eines dritten Teils des zweiten Abstandhalters (2020) zwischen dem ersten und dem zweiten Teil des zweiten Abstandhalters (2020) ist.

10. System, das Folgendes umfasst:

das Gegenstück (2012) nach Anspruch 1;
einen Objektträger (2026);
eine Trägerplatte (2034), die dazu konfiguriert ist, den Objektträger (2026) zu stützen; und
einen Aktor (2036), der dazu konfiguriert ist, das Gegenstück (2012) relativ zu der Trägerplatte (2034) zu drehen, die Trägerplatte (2034) relativ zu dem Gegenstück (2012), oder beide in einer Drehebene von einem ersten Endzustand in einen zweiten Endzustand und durch einen Bereich von Zwischenzuständen zwischen dem ersten und zweiten Endzustand, zu drehen,
wobei
in dem ersten Endzustand der erste und der zweite Abstandhalter (2018, 2020) dazu konfiguriert sind, den ersten und zweiten Seitenteil (2016a, 2016b) der Fluidmanipulationsoberfläche (2016) jeweils unterschiedlich von dem ersten und zweiten Seitenteil (2028a, 2028b) der probentragenden Oberfläche (2028) zu beabstanden, so dass bewirkt wird, dass sich der fluidhaltende Spalt (2046) volumetrisch in einer zweiten Richtung (2050) verjüngt, und

in dem zweiten Endzustand der erste und der zweite Abstandhalter (2018, 2020) dazu konfiguriert sind, den ersten und zweiten Seitenteil (2016a, 2016b) der Fluidmanipulationsoberfläche (2016) jeweils unterschiedlich von dem ersten und zweiten Seitenteil (2028a, 2028b) der probentragenden Oberfläche (2028) zu beabstanden, so dass bewirkt wird, dass sich der fluidhaltende Spalt (2046) volumetrisch in einer dritten Richtung (2050) verjüngt, die sich von der ersten Richtung (2048) unterscheidet.

**11.** Verfahren zum Verarbeiten einer Probe (2008, 2030), das Folgendes umfasst:

Bilden eines fluidhaltenden Spalts (2046) zwischen einer Fluidmanipulationsoberfläche (2016) eines gekrümmten Körpers (2014) eines Gegenstücks (2012) und einer probentragenden Oberfläche (2028) eines Objektträgers (2026) nahe dem Gegenstück (2012) durch Verwenden von wenigstens zwei Abstandhalterelementen, wobei das Fluid (2005, 2009) eine Flüssigkeit ist,

die Abstandhalterelemente einen ersten Abstandhalter (2018) an einem ersten Seitenteil (2016a) der Fluidmanipulationsoberfläche (2016) und einen zweiten Abstandhalter (2020) an einem zweiten Seitenteil (2016b) der Fluidmanipulationsoberfläche (2016) beinhalten, wobei der zweite Seitenteil (2016b) von dem ersten Seitenteil (2016a) beabstandet ist, und ein Abschnitt des Höhenprofils des ersten Abstandhalters (2018) und ein Abschnitt des Höhenprofils des zweiten Abstandhalters (2020) auf entgegengesetzten Seiten des Gegenstücks (2012) unterschiedlich sind; und

Ändern einer relativen Position des Gegenstücks (2012) relativ zu dem Objektträger (2026) in einer Drehebene, um das Fluidvolumen (2005, 2009) innerhalb des fluidhaltenden Spalts (2046) über einen Verarbeitungspfad (2031), der sich über eine Probe (2008, 2030) an der probentragenden Oberfläche (2028) erstreckt, vorwärtszubewegen und um eine volumetrische Asymmetrie des fluidhaltenden Spalts (2046) relativ zu einer halbierenden Ebene (2004, 2010, 2014) parallel zu der Drehebene zu ändern.

**12.** Verfahren nach Anspruch 11, das ferner Herbeiführen von Mischen des Fluids (2005, 2009) in einer seitlichen Richtung allgemein senkrecht zu dem Verarbeitungspfad (2031) durch Ändern der volumetrischen Asymmetrie des fluidhaltenden Spalts (2046) umfasst.

**13.** Verfahren nach Anspruch 11, wobei Ändern der volumetrischen Asymmetrie des fluidhaltenden Spalts (2046) Ändern einer volumetrischen Verjüngung des fluidhaltenden Spalts (2046) in einer Richtung allgemein senkrecht zu dem Verarbeitungspfad (2031) beinhaltet.

**14.** Verfahren nach Anspruch 11, wobei:

der Verarbeitungspfad (2031) einen ersten Endteil (2031a), einen zweiten Endteil (2031c) und einen Mittenteil (2031b) zwischen dem ersten und dem zweiten Endteil (2031a, 2031c) beinhaltet;
der fluidhaltende Spalt (2046) relativ zu der halbierenden Ebene (2004, 2010, 2014) eine erste volumetrische Asymmetrie aufweist, wobei sich das Fluid (2005, 2009) an einem ersten Endteil (2031a) des Verarbeitungspfades (2031) befindet;
der fluidhaltende Spalt (2046) relativ zu der halbierenden Ebene (2004, 2010, 2014) eine zweite volumetrische Asymmetrie aufweist, wobei sich das Fluid (2005, 2009) an einem zweiten Endteil (2031a) des Verarbeitungspfades (2031) befindet; und
die erste volumetrische Asymmetrie allgemein der zweiten volumetrischen Asymmetrie gegenüberliegt.

**15.** Verfahren nach Anspruch 11, das ferner senkrechtes Drehen von wenigstens einem Teil der Fluidmanipulationsoberfläche (2016) relativ zu der Drehebene umfasst, während das Gegenstück (2012) relativ zu dem Objektträger (2026) gedreht wird, der Objektträger (2026) relativ zu dem Gegenstück (2012), oder beide in der Drehebene, gedreht werden.

**16.** Verfahren nach Anspruch 11, das ferner Folgendes umfasst:

gleichzeitig Drehen von wenigstens einem Teil (2016a, 2016b) der Fluidmanipulationsoberfläche (2016) in einer ersten Richtung (2048) und Drehen des Gegenstücks (2012) relativ zu dem Objektträger (2026), Drehen des Objektträgers (2026) relativ zu dem Gegenstück (2012), oder beider, in einer zweiten Richtung (2050); und
gleichzeitig Drehen von wenigstens einem Teil (2016a, 2016b) der Fluidmanipulationsoberfläche (2016) in einer dritten Richtung (2052) und Drehen des Gegenstücks (2012) relativ zu dem Objektträger (2026), Drehen des Objektträgers (2026) relativ zu dem Gegenstück (2012), oder beider, in einer vierten Richtung (2054),

wobei

sich die erste, zweite, dritte und vierte Richtung (2048, 2050, 2052, 2054) unterscheiden,
die erste Richtung (2048) allgemein entgegengesetzt zu der dritten Richtung (2052) ist, und
die zweite Richtung (2050) allgemein entgegengesetzt zu der vierten Richtung (2054) ist.

17. Verfahren nach Anspruch 11, wobei
die Probe (2008, 2030) auf einer Seite von der halbierenden Ebene (2004, 2010, 2014) eine erste Antigenbeladung aufweist;
die Probe (2008, 2030) auf der gegenüberliegenden Seite von der halbierenden Ebene (2004, 2010, 2014) eine zweite Antigenbeladung aufweist;
die zweite Antigenbeladung von etwa 100% bis etwa 300% größer als die erste Antigenbeladung ist;
das Verfahren ferner Färben der Probe (2008, 2030) durch Vorwärtsbewegen des Fluids (2005, 2009) über den Verarbeitungspfad (2031) beinhaltet; und
Ändern der volumetrischen Asymmetrie des fluidhaltenden Spalts (2046) eine Färbungsgleichmäßigkeit der Probe (2008, 2030) nach dem Färben der Probe (2008, 2030) erhöht.

**Revendications**

1. Elément opposable (2012) pour le traitement d'un spécimen (2008, 2030), comportant
un corps (2014) ayant une surface de manipulation de fluide non plane (2016), le fluide (2005, 2009) étant un liquide ; et
au moins deux éléments d'espacement accouplés au corps (2014) et configurés pour espacer la surface de manipulation de fluide (2016) par rapport à une lame (2026) pour définir un espace de support de fluide (2046) entre la surface de manipulation de fluide (2016) et la lame (2026) ;
**caractérisé en ce que** les éléments d'espacement comportent
un premier espaceur (2018) au niveau d'une première portion latérale (2016a) de la surface de manipulation de fluide (2016), et
un deuxième espaceur (2020) au niveau d'une deuxième portion latérale (2016b) de la surface de manipulation de fluide (2016), la deuxième portion latérale (2016b) étant espacée de la première portion latérale (2016a),
une section du profil de hauteur du premier espaceur (2018) et une section du profil de hauteur du deuxième espaceur (2020) sur des côtés opposés des éléments opposables (2012) étant différentes.

2. Ensemble de traitement de spécimen (2032), comprenant :

un élément opposable (2012) selon la revendication 1 ; et
un actionneur (2036) configuré pour changer une position de l'élément opposable (2012) par rapport à la lame (2026) ou pour changer la position de la lame (2026) par rapport à l'élément opposable (2012) pour déplacer un volume de fluide (2005) dans une première direction (2048) le long de la lame (2026) tandis que l'élément d'espacement vient en contact avec la lame (2026) pour faire varier une section transversale de l'espace de support de fluide (2046) dans un plan qui est sensiblement perpendiculaire à la première direction (2048) et pour déplacer un volume du fluide (2009) dans une deuxième direction (2050) le long de la lame (2026) tandis que l'élément d'espacement vient en contact avec la lame (2026) pour faire varier la section transversale de l'espace de support de fluide (2046) dans un plan qui est sensiblement perpendiculaire à la deuxième direction (2048, 2050).

3. Ensemble de traitement de spécimen (2032) selon la revendication 2, dans lequel :

l'actionneur (2036) est configuré pour faire tourner au moins l'un des éléments opposables (2012) dans un plan de rotation ;
les éléments d'espacement comprennent une pluralité de premiers éléments de formation d'interstices (1450) au niveau de la première portion latérale (2016a) de la surface de manipulation de fluide (2016) et une pluralité de deuxièmes éléments de formation d'interstices (1452) au niveau de la deuxième portion latérale (2016b) de la surface de manipulation de fluide (2016) ; et
la pluralité de premiers éléments de formation d'interstices (1450) maintiennent un espace entre le corps (2014) de l'élément opposable (2012) et la lame (2026) et définissent un premier profil de hauteur parallèle au plan de rotation, et la pluralité des deuxièmes éléments de formation d'interstices (1452) définissent un deuxième profil de hauteur parallèle au plan de rotation qui est différent du premier profil de hauteur.

4. Ensemble de traitement de spécimen (2032) selon la revendication 2, comprenant en outre :

une platine (2034) configurée pour supporter une lame (2026) ayant une surface de support de spécimen (2028) ;
l'élément opposable (2012) comportant en outre un corps arqué (2014) ayant la surface de manipulation de fluide (2016),
l'actionneur (2036) étant configuré pour déplacer l'élément opposable (2012) par rapport à la platine (2034), pour déplacer la platine (2034) par rapport à l'élément opposable (2012), ou les deux dans un plan de rotation, la première et la deuxième portion latérale étant généralement parallèles au plan de rotation,
le premier espaceur (2018) ayant un profil de hauteur parallèle au plan de rotation, différent d'un profil de hauteur du deuxième espaceur (2020) parallèle au plan de rotation.

5. Ensemble de traitement de spécimen (2032) selon la revendication 4, dans lequel :

le premier espaceur (2018) comprend une première pluralité de saillies discrètes (2022) configurées pour venir en contact avec la surface de support de spécimen (2028) ; et
le deuxième espaceur (2020) comprend une deuxième pluralité de saillies discrètes (2022) configurées pour venir en contact avec la surface de support de spécimen (2028).

6. Ensemble de traitement de spécimen (2032) selon la revendication 4, dans lequel :

l'actionneur (2036) est configuré pour faire tourner l'élément opposable (2012) par rapport à la platine (2034), pour faire tourner la platine (2034) par rapport à l'élément opposable (2012), ou les deux, depuis un premier état d'extrémité dans un deuxième état d'extrémité et à travers une gamme d'états intermédiaires entre le premier et le deuxième état d'extrémité ;
le corps (2014) est configuré pour former un interstice de support de fluide (2046) entre une portion d'une région centrale (2016c) de la surface de manipulation de fluide (2016) et une portion correspondante d'une région centrale (2028c) de la surface de support de spécimen (2028) ;
la rotation de l'élément opposable (2012) par rapport à la platine (2034), la rotation de la platine (2034) par rapport à l'élément opposable (2012), ou les deux, change la portion de la région centrale (2016c) de la surface de manipulation de fluide (2016) et la portion correspondante de la région centrale (2028c) de la surface de support de spécimen (2028) forment l'interstice de support de fluide (2046) ;
le premier et le deuxième espaceur (2018, 2020) sont configurés

pour qu'une section transversale de l'interstice de support de fluide (2046) dans un premier plan perpendiculaire au plan de rotation ait une première asymétrie dans le premier état d'extrémité par rapport à un plan bissecteur (2004, 2010, 2014) parallèle au plan de rotation, et
pour qu'une section transversale de l'interstice de support de fluide (2046) dans un deuxième plan perpendiculaire au plan de rotation ait une deuxième asymétrie par rapport au plan bissecteur (2004, 2010, 2014) dans le deuxième état d'extrémité ; et

la première asymétrie est différente de la deuxième asymétrie.

7. Ensemble de traitement de spécimen (2032) selon la revendication 4, dans lequel le premier et le deuxième espaceur (2018, 2020) sont configurés pour qu'au moins une portion de la surface de manipulation de fluide (2016) tourne perpendiculairement par rapport au plan de rotation tandis que l'actionneur (2036) fait tourner l'élément opposable (2012) par rapport à la platine (2034), fait tourner la platine (2034) par rapport à l'élément opposable (2012), ou les deux, dans le plan de rotation.

8. Ensemble de traitement de spécimen (2032) selon la revendication 4, dans lequel :

l'actionneur (2036) est configuré pour faire tourner l'élément opposable (2012) par rapport à la platine (2034), pour faire tourner la platine (2034) par rapport à l'élément opposable (2012), ou les deux, depuis un premier état d'extrémité dans lequel une première portion du premier espaceur (2018) et une première portion du deuxième espaceur (2020) viennent en contact avec la surface de support de spécimen (2028) dans un deuxième état d'extrémité dans lequel une deuxième portion du premier espaceur (2018) et une deuxième portion du deuxième espaceur (2020) viennent en contact avec la surface de support de spécimen (2028) ;
la première portion du premier espaceur (2018) est espacée de la deuxième portion du premier espaceur (2018) au niveau de la première portion latérale (2016a) de la surface de manipulation de fluide (2016) ;

la première portion du deuxième espaceur (2020) est espacée de la deuxième portion du deuxième espaceur (2020) au niveau de la deuxième portion latérale (2016b) de la surface de manipulation de fluide (2016) ; une hauteur moyenne de la première portion du premier espaceur (2018) est supérieure à une hauteur moyenne de la première portion du deuxième espaceur (2020) ; et une hauteur moyenne de la deuxième portion du premier espaceur (2018) est inférieure à une hauteur moyenne de la deuxième portion du deuxième espaceur (2020).

9. Ensemble de traitement de spécimen (2032) selon la revendication 8, dans lequel une hauteur moyenne d'une troisième portion du premier espaceur (2018) entre la première et la deuxième portion du premier espaceur (2018) est environ égale à une hauteur moyenne d'une troisième portion du deuxième espaceur (2020) entre la première et la deuxième portion du deuxième espaceur (2020).

10. Système comprenant :

l'élément opposable (2012) selon la revendication 1 ;
une lame (2026) ;
une platine (2034) configurée pour supporter la lame (2026) ; et
un actionneur (2036) configuré pour faire tourner l'élément opposable (2012) par rapport à la platine (2034), pour faire tourner la platine (2034) par rapport à l'élément opposable (2012), ou les deux, d'un premier état d'extrémité dans un deuxième état d'extrémité et à travers une gamme d'états intermédiaires entre le premier et le deuxième état d'extrémité dans un plan de rotation,
dans lequel
dans le premier état d'extrémité, le premier et le deuxième espaceur (2018, 2020) sont configurés pour espacer différemment la première et la deuxième portion latérale (2016a, 2016b) de la surface de manipulation de fluide (2016) de la première et de la deuxième portion latérale (2028a, 2028b) de la surface de support de spécimen (2028), respectivement, de manière à ce que l'interstice de support de fluide (2046) diminue en volume dans une deuxième direction (2050), et
dans le deuxième état d'extrémité, le premier et le deuxième espaceur (2018, 2020) sont configurés pour espacer différemment la première et la deuxième portion latérale (2016a, 2016b) de la surface de manipulation de fluide (2016) de la première et de la deuxième portion latérale (2028a, 2028b) de la surface de support de spécimen (2028), respectivement, de manière à ce que l'interstice de support de fluide (2046) diminue en volume dans une troisième direction (2052) différente de la première direction (2048).

11. Procédé de traitement d'un spécimen (2008, 2030), comprenant :

la formation d'un interstice de support de fluide (2046) entre une surface de manipulation de fluide (2016) d'un corps arqué (2014) d'un élément opposable (2012) et une surface de support de spécimen (2028) d'une lame (2026) à proximité de l'élément opposable (2012) en utilisant au moins deux éléments d'espacement,

le fluide (2005, 2009) étant un liquide,
les éléments d'espacement comportant un premier espaceur (2018) au niveau d'une première portion latérale (2016a) de la surface de manipulation de fluide (2016), et un deuxième espaceur (2020) au niveau d'une deuxième portion latérale (2016b) de la surface de manipulation de fluide (2016), la deuxième portion latérale (2016b) étant espacée de la première portion latérale (2016a), et une section du profil de hauteur du premier espaceur (2018) et une section du profil de hauteur du deuxième espaceur (2020) sur des côtés opposés de l'élément opposable (2012) étant différentes ; et

le changement d'une position relative de l'élément opposable (2012) par rapport à la lame (2026) dans un plan de rotation pour faire avancer un volume de fluide (2005, 2009) dans l'interstice de support de fluide (2046) sur un chemin de traitement (2031) s'étendant sur un spécimen (2008, 2030) au niveau de la surface de support de spécimen (2028) et pour changer une asymétrie de volume de l'interstice de support de fluide (2046) par rapport à un plan bissecteur (2004, 2010, 2014) parallèle au plan de rotation.

12. Procédé selon la revendication 11, comprenant en outre l'amorce du mélange du fluide (2005, 2009) dans une direction latérale généralement perpendiculaire au chemin de traitement (2031) en changeant l'asymétrie de volume de l'interstice de support de fluide (2046).

13. Procédé selon la revendication 11, dans lequel le changement de l'asymétrie de volume de l'interstice de support de fluide (2046) inclut le changement d'une réduction de volume de l'interstice de support de fluide (2046) dans une direction généralement perpendiculaire au chemin de traitement (2031).

**14.** Procédé selon la revendication 11, dans lequel :

le chemin de traitement (2031) comporte une première portion d'extrémité (2031a), une deuxième portion d'extrémité (2031c), et une portion centrale (2031b) entre la première et la deuxième portion d'extrémité (2031a, 2031c) ;
l'espace de support de fluide (2046) présente une première asymétrie de volume par rapport au plan bissecteur (2004, 2010, 2014) quand le fluide (2005, 2009) est dans la première portion d'extrémité (2031a) du chemin de traitement (2031) ;
l'interstice de support de fluide (2046) présente une deuxième asymétrie de volume par rapport au plan bissecteur (2004, 2010, 2014) quand le fluide (2005, 2009) est dans la deuxième portion d'extrémité (2031c) du chemin de traitement (2031) ; et
la première asymétrie de volume est généralement opposée à la deuxième asymétrie de volume.

**15.** Procédé selon la revendication 11, comprenant en outre le fait de faire tourner perpendiculairement au moins une portion de la surface de manipulation de fluide (2016) par rapport au plan de rotation tout en faisant tourner l'élément opposable (2012) par rapport à la lame (2026), de faire tourner la lame (2026) par rapport à l'élément opposable (2012), ou les deux, dans le plan de rotation.

**16.** Procédé selon la revendication 11, comprenant en outre :

le fait de faire tourner simultanément au moins une portion (2016a, 2016b) de la surface de manipulation de fluide (2016) dans une première direction (2048) et de faire tourner l'élément opposable (2012) par rapport à la lame (2026), de faire tourner la lame (2026) par rapport à l'élément opposable (2012), ou les deux, dans une deuxième direction (2050) ; et
le fait de faire tourner simultanément au moins une portion (2016a, 2016b) de la surface de manipulation de fluide (2016) dans une troisième direction (2052) et de faire tourner l'élément opposable (2012) par rapport à la lame (2026), de faire tourner la lame (2026) par rapport à l'élément opposable (2012), ou les deux, dans une quatrième direction (2054),
dans lequel
les première, deuxième, troisième et quatrième directions (2048, 2050, 2052, 2054) sont différentes,
la première direction (2048) est généralement opposée à la troisième direction (2052), et
la deuxième direction (2050) est généralement opposée à la quatrième direction (2054).

**17.** Procédé selon la revendication 11, dans lequel :

le spécimen (2008, 2030) d'un côté du plan bissecteur (2004, 2010, 2014) a une première charge d'antigène ;
le spécimen (2008, 2030) du côté opposé du plan bissecteur (2004, 2010, 2014) a une deuxième charge d'antigène ;
la deuxième charge d'antigène est environ 100 % à environ 300 % supérieure à la première charge d'antigène ;
le procédé comprend en outre la coloration du spécimen (2008, 2030) en faisant avancer le fluide (2005, 2009) sur le chemin de traitement (2031) ; et
le changement de l'asymétrie de volume de l'interstice de support de fluide (2046) augmente une uniformité de coloration du spécimen (2008, 2030) après la coloration du spécimen (2008, 2030) .

**FIG.1**

**FIG.2**

*FIG.3A*

*FIG.3B*

**FIG.4**

**FIG.5**

**FIG.6A**

**FIG.6B**

**FIG.7**

**FIG.8**

**FIG.9**

FIG.10

FIG.10A

FIG.10B

FIG.10C

FIG.11

FIG.12

FIG.13

**_FIG.14_**

**_FIG.15_**

*FIG.16A*

*FIG.16B*

*FIG.17A*

*FIG.17B*

*FIG.18A*

*FIG.18B*

*FIG.19A*

*FIG.19B*

*FIG.20A*

*FIG.20B*

*FIG.21*

*FIG.22*

*FIG.23*

*FIG.24*

*FIG.25*

*FIG.26*

*FIG.27*

**FIG.28**

**FIG.29**

**FIG.30**

**FIG.31**

**FIG.32**

**FIG.33**

1461, 1463  952  2014  2050  34B  2012

2016  **FIG.34A**  34B  2026

2048

2012  2028a  F  2028c  2014  2028b

2026  2022b  2016c  FIG.34C  2022o  2016b
2016a

**FIG.34B**

2016c  2046
2014  F
2028c  2026

**FIG.34C**

*FIG.35A*

*FIG.35B*

*FIG.35C*

**FIG.36A**

**FIG.36B**

**FIG.36C**

**FIG.37**

**FIG.38**

**EP 2 938 995 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011060387 A1
- US 2006019302 A1
- US 2011305842 A1
- US 6485918 B1
- WO 2011139978 A1